(19) Europäisches Patentamt
European Patent Office
Office européen des brevets

(11) **EP 4 362 169 A1**

(12) **EUROPEAN PATENT APPLICATION**
published in accordance with Art. 153(4) EPC

(43) Date of publication:
**01.05.2024 Bulletin 2024/18**

(21) Application number: **22828310.7**

(22) Date of filing: **16.06.2022**

(51) International Patent Classification (IPC):
**H01M 10/54** (2006.01)      **H01M 4/505** (2010.01)
**H01M 4/525** (2010.01)

(52) Cooperative Patent Classification (CPC):
**H01M 4/505; H01M 4/525; H01M 10/54;**
**Y02W 30/84**

(86) International application number:
**PCT/JP2022/024041**

(87) International publication number:
**WO 2022/270393 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.06.2021   JP 2021105006
15.06.2022   JP 2022096151**

(71) Applicants:
• **Dowa Eco-System Co., Ltd.
Tokyo 101-0021 (JP)**
• **Akita University
Akita-shi
Akita 010-8502 (JP)**

(72) Inventors:
• **YODOSE, Tatsuya
Tokyo 101-0021 (JP)**
• **WATANABE, Ryoei
Tokyo 101-0021 (JP)**
• **HONMA, Yoshihiro
Tokyo 101-0021 (JP)**
• **KUMAGAI, Seiji
Akita-shi, Akita 010-8502 (JP)**

(74) Representative: **Müller-Boré & Partner
Patentanwälte PartG mbB
Friedenheimer Brücke 21
80639 München (DE)**

(54) **RECYCLED POSITIVE ELECTRODE MATERIAL PRECURSOR, RECYCLED POSITIVE ELECTRODE MATERIAL, METHOD FOR PRODUCING SAME, AND RECYCLED LITHIUM ION SECONDARY BATTERY**

(57)     There is provided a recycled cathode material precursor, including: a metal element $\alpha$ consisting of at least one of nickel, cobalt and manganese; and a metal element $\beta$ consisting of at least one of iron, copper and aluminum, wherein a content of the metal element $\beta$ is 0.5 to 20% by mass in the recycled cathode material precursor.

EP 4 362 169 A1

**FIG. 1**

Lithium secondary battery to be treated

↓

| Heat treatment step |

↓

Heat-treated product

↓

| Crushing step |

↓

| Classifying step |

↓

Fine-grained product (Black powder)

↓

| Magnetic separation step |

↓

Physically treated product

Addition of acid → | Acid treatment step |

↓

Filtrate

Addition of alkali → | Alkaline treatment step |

↓

Precipitate

Addition of water → | Washing step |

↓

Recycled cathode material precursor

Addition of Lithium compound → | Crushing and mixing step |

↓

| Firing step |

↓

| Crushing step |

↓

Recycled cathode material

↓

| Battery manufacturing step |

↓

Lithium ion secondary battery

**Description**

Technical Field

The present invention relates to a recycled cathode material precursor and a recycled cathode material, which are recycled from a recovered material recovered from a lithium ion secondary battery to be treated, and a method for manufacturing them, and a recycled lithium-ion secondary battery in which the recovered cathode material is used.

Description of Related Art

Applications of a lithium-ion secondary battery are rapidly expanding from an electronics field to an automotive field. Particularly, in the automotive field, for a hybrid and electric vehicle such as a plug-in hybrid vehicle (PHEV) and a battery electric vehicle (BEV), demand for a large battery is expected to rise sharply along with a higher capacity of a unit. The rapid increase in demand for a large battery is also caused by strong demand to reduce $CO_2$ emissions in the field of transportation. As the demand for the lithium-ion secondary battery expands, an amount of lithium-ion secondary batteries that have reached the end of their product life also increases. Hereinafter, the lithium-ion secondary battery is also called "LIB."

On the other hand, since an expensive metal material is used for LIB as its cathode material, it is an important industrial issue to recycle the metal material from the LIB that has reached the end of its product life.

For example, Patent document 1 discloses a technique of removing impurities from a waste battery, a waste cathode material, or a mixture thereof containing the impurities and a group of metals comprising at least two selected from Co, Ni and Mn, to recover the metal group as a mixture of the metal salts. Also, Patent document 1 proposes to manufacture a cathode material using a mixture of the recovered metal salts.

Prior art document

Patent document

[Patent Document 1] Japanese Patent No. 5847742

Summary of the invention

Problem to be solved by the invention

However, in order to recycle the metal material from the waste LIB that has reached the end of its product life, small environmental load associated with recycling and a low recycling cost are required. However, for example, the method described in Patent document 1 involves a problem that complicated separation process and heavy use of a high-cost extraction agent result in a large environmental load and a high cost associated with recycling.

For example: for an automotive LIB cell such as PHEV, BEV, etc., a robust package is required to withstand strong mechanical shock, ingress of all kinds of liquids, fire and high temperature. LIB laminate in a LIB cell is typically disassembled into internal components (cathode, anode, separator) and an outer cover. In the method described in Patent document 1, it is necessary to dismantle the cell. Therefore, the method described in Patent document 1 requires a safety measure against electric shock, fire, and exposure to chemical substances. Further, due to the robust package of the LIB laminate, mechanical removal of a cathode active material from the cell is complicated. This poses a more conspicuous problem when a sharp increase of the demand for the above-described large battery occurs, and a treatment amount of the waste LIB is increased.

The present invention has been made under the circumstances described above, and a problem to be solved is to recover LIB to be treated with less environmental load and low recycling cost.

Although it is a different problem from the above problem, a recycled LIB, which is a recycled product, does not have a good image in terms of a battery performance compared to a new LIB before recycling.

Another problem to be solved by the present invention is to provide a recycled cathode material precursor, a recycled cathode material and a recycled LIB that can bring added value (premium) in terms of a battery performance when compared to new.

In the present invention, the term "recycled cathode material precursor" refers to a material obtained by adding a predetermined amount of a lithium compound to the recycled cathode material precursor to form a mixture, and firing the mixture to obtain a recycled cathode material.

Means for solving the problem

In order to solve the above-described problem, first invention provides a recycled cathode material precursor, including:

a metal element α consisting of at least one of nickel, cobalt and manganese; and
a metal element β consisting of at least one of iron, copper and aluminum,
wherein a content of the metal element β is 0.5 to 20% by mass in the recycled cathode material precursor.

Second invention provides the recycled cathode material precursor according to the first invention, wherein a content of the metal element α is 30% by mass or more in the recycled cathode material precursor.

Third invention provides the recycled cathode material precursor according to the first or second invention, wherein a value of the content of the metal element α/the content of the metal element β is 6.0 or more in the recycled cathode material precursor.

Fourth invention provides the recycled cathode material precursor according to any one of the first to third inventions, wherein the metal element α is contained in the recycled cathode material precursor, with a hydroxide of the metal element α as a main component.

Fifth invention provides the recycled cathode material precursor according to any one of the first to fourth inventions, wherein the metal element β is contained in the recycled positive electrode material precursor, with a hydroxide of the metal element β as a main component.

Sixth invention provides the recycled cathode material precursor according to any one of the first to fourth inventions, wherein a content of Ca is 0.03 to 0.08% by mass and a content of Mg is 0.02 to 0.04% by mass, in the recycled cathode material precursor.

Seventh invention provides a recycled cathode material, including:

lithium;

a metal element α consisting of at least one of nickel, cobalt and manganese; and
a compound β' consisting of at least one of iron oxide, copper oxide and aluminum oxide,
wherein a content of the compound β' is 0.5 to 20% by mass in the recycled cathode material.

Eighth invention provides the recycled cathode material according to the seventh invention, wherein a content of the metal element α is 40 to 70% by mass in the recycled cathode material.

Nineth invention provides the recycled cathode material according to the seventh or eighth invention, wherein when a metal element β is a metal element composing the compound β' and consisting of at least one of iron, copper, and aluminum,
a value of a content of the metal element α/a content of the metal element β is 6.0 or more in the recycled positive electrode material.

Tenth invention provides the recycled cathode material according to any one of the seventh to ninth inventions, wherein a content of Ca is 0.03 to 0.08% by mass and a content of Mg is 0.02 to 0.04% by mass in the recycled cathode material.

Eleventh invention provides a recycled lithium ion secondary battery configured by the recycled cathode material according to any one of the seventh to tenth inventions, which is a recycled lithium ion secondary battery comprising a cathode, an anode, a separator, and an electrolyte.

Twelfth invention provides a method for manufacturing a recycled cathode material precursor including a metal element α consisting of at least one of nickel, cobalt and manganese, and a metal element β consisting of at least one of iron, copper and aluminum, the method including:

applying heat treatment to a lithium ion secondary battery, which is an object to be treated, to obtain a heat-treated product;
crushing the heat-treated product to obtain a crushed product; and
physically separating the crushed product to obtain a physically treated product, and concentrating the metal element α in the physically treated product,
wherein a content of the metal element β is 0.5 to 20% by mass in the recycled cathode material precursor.

Thirteenth invention provides the method for manufacturing a recycled cathode material precursor according to the twelfth invention, further including:

applying the heat treatment at 700°C or higher;

adding an acid solution to the physically treated product to obtain an acid-treated solution in which the metal element $\alpha$ and the metal element $\beta$ are dissolved; and

mixing the acid-treated solution and an alkaline solution to precipitate the dissolved metal element $\alpha$ and metal element $\beta$ to obtain a recycled cathode material precursor.

Fourteenth invention provides the method for manufacturing a recycled cathode material precursor according to the twelfth or thirteenth invention, wherein in the physical separation, a content of the metal element $\beta$ in the crushed product is 20% by mass or less.

Fifteenth invention provides the recycled cathode material precursor according to any one of the twelfth to fourteenth inventions, wherein a content of the metal element $\alpha$ is 40% by mass or more in the physically treated product.

Sixteenth invention provides the recycled cathode material precursor according to any one of the twelfth to fifteenth inventions, wherein a value of the content of the metal element $\alpha$/the content of the metal element $\beta$ is 6.0 or more in the physically treated product.

Seventeenth invention provides the method for manufacturing a recycled cathode material precursor according to any one of the twelfth to sixteenth inventions, wherein the physical separation includes at least a magnetic separation.

Eighteenth invention provides the method for manufacturing a recycled cathode material precursor according to any one of the twelfth to seventeenth inventions, wherein the physical separation includes at least a classifying separation and a magnetic separation.

Nineteenth invention provides the method for manufacturing a recycled cathode material precursor according to any one of the twelfth to eighteenth inventions, wherein a difference between mass 1 of each element composing the metal element $\alpha$ in the physically treated product and mass 2 of each element composing the metal element $\alpha$ in the recycled cathode material precursor is 30% or less of mass 1 for each element.

Twentieth invention provides the method for manufacturing a recycled cathode material precursor according to any one of the twelfth to nineteenth inventions, wherein when comparing content ratio 1 between elements composing the metal element $\alpha$ in the physically treated product and content ratio 2 between elements composing the metal element $\alpha$ in the recycled cathode material precursor, a change range is 30% or less.

Twenty-first invention provides the method for manufacturing a recycled cathode material precursor according to any one of the twelfth to twentieth inventions, wherein a difference between mass 3 of the metal element $\beta$ in the physically treated product and mass 4 of the metal element $\beta$ in the recycled cathode material precursor, is 30% or less of mass 3 for each metal element $\beta$.

Twenty-second invention provides the method for manufacturing a recycled cathode material precursor according to any one of the twelfth to twenty-first inventions, wherein when comparing content ratio 3 between elements composing the metal element $\beta$ in the physically treated product and content ratio 4 between elements composing the metal element $\beta$ in the recycled cathode material precursor, a change range is 30% or less.

Twenty-third invention provides the method for manufacturing a recycled cathode material precursor according to any one of the twelfth to twenty-second inventions, wherein when comparing content ratio 5 between elements composing the metal element $\alpha$ and the metal element $\beta$ in the physically treated product and content ratio 6 between elements composing the metal element $\alpha$ and the metal element $\beta$ in the recycled cathode material precursor, a change range is 30% or less.

Twenty-fourth invention provides the method for manufacturing a recycled cathode material precursor according to any one of the twelfth to twenty-third inventions, wherein, a content of Ca is 0.03 to 0.08% by mass, and a content of Mg is 0.02 to 0.04% by mass in the physically treated product.

Twenty-fifth invention provides a method for manufacturing a recycled cathode material, the method including:

mixing the recycled cathode material precursor obtained by the method for manufacturing a recycled cathode material precursor according to any one of the twelfth to twenty-fourth inventions and a predetermined amount of a lithium source to obtain a mixed powder; and

firing the mixed powder to obtain a recycled cathode material.

Advantage of the invention

According to the present invention, LIB to be treated can be recycled with less environmental load and low recycling cost.

Also, the present invention provides a recycled cathode material precursor, a recycled cathode material and a recycled LIB that can bring added value (premium) in terms of a battery performance when compared to new.

Brief description of the drawings

FIG. 1 is a flow chart of the manufacture of a recycled cathode material precursor and a recycled cathode material according to the present invention.

FIG. 2 is a schematic view showing a structure of a coin cell according to example 1.

FIG. 3 is a graph showing a half-cell rate test result according to example 1.

FIG. 4 is a graph showing a half-cell cycle test result according to example 1.

FIG. 5 is a graph showing a full-cell rate test result according to example 1.

FIG. 6 is a graph showing a full-cell cycle test result according to example 1.

FIG. 7 is a graph showing a half-cell rate test result according to comparative example 1.

FIG. 8 is a graph showing a half-cell cycle test result according to comparative example 1.

FIG. 9 is a graph showing a full-cell rate test result according to comparative example 1.

FIG. 10 is a graph showing a full-cell cycle test result according to comparative example 1.

FIG. 11 is a Ragone plot of example 1.

FIG. 12 is a Ragone plot of comparative example 1.

FIG. 13 is a voltage dependent capacity profile in each cycle at 15 mA/g according to example 1.

FIG. 14 is a voltage dependent capacity profile in each cycle at 15 Ma/G according to comparative example 1.

FIG. 15 is a graph in which the results (release: Extraction) of FIG. 3 according to example 1 and the results (release: Extraction) of FIG. 7 according to comparative example 1 are summarized in one graph.

FIG. 16 is a graph in which the results of FIG. 3 (insertion: Insertion) according to example 1 and the results of FIG. 7 (insertion: Insertion) according to comparative example 1 are summarized in one graph.

FIG. 17 is a graph in which the results of FIG. 4 (release: Extraction) according to example 1 and the results (release: Extraction) of FIG. 8 according to comparative example 1 are summarized in one graph.

FIG. 18 is a graph in which the results of FIG. 4 (efficiency: Efficiency) of FIG. 4 according to example 1 and the results of FIG. 8 (efficiency: Efficiency) according to comparative example 1 are summarized in one graph.

FIG. 19 is a potential dependent capacity profile in the first cycle at 12.0 mA/g according to example 1 and at 15.5 mA/g according to comparative example 1.

FIG. 20 is a voltage dependent capacity profile in 2nd to 5th cycles at 12.0 mA/g according to example 1.

FIG. 21 is a voltage dependent capacity profile in 2nd to 5th cycles at 15.5 mA/g according to comparative example 1.

FIG. 22 is a graph in which the results (release: Extraction) of FIG. 5 according to example 1 and the results (release: Extraction) of FIG. 9 according to comparative example 1 are summarized in one graph.

FIG. 23 is a graph in which the results of FIG. 5 (insertion: Insertion) according to example 1 and the results of FIG. 9 (insertion: Insertion) according to comparative example 1 are summarized in one graph.

FIG. 24 is a potential dependent capacity profile in each cycle when a current density is kept at 2C for the full-cell in which graphite is used as an anode, according to example 1.

FIG. 25 is a potential dependent capacity profile in each cycle when the current density is kept at 2C for the full-cell in which graphite is used as an anode, according to comparative example 1.

FIG. 26 is a graph in which the results of FIG. 5 (Charge, Discharge) according to example 1 and the results of FIG. 10 (Charge, Discharge) according to comparative example 1 are summarized in one graph.

FIG. 27 shows an SEM image and an elemental mapping image of particles composing the recycled cathode material according to example 1, and shows an elemental mapping image for each element (shown in the upper right of the figure).

Detailed description of the invention

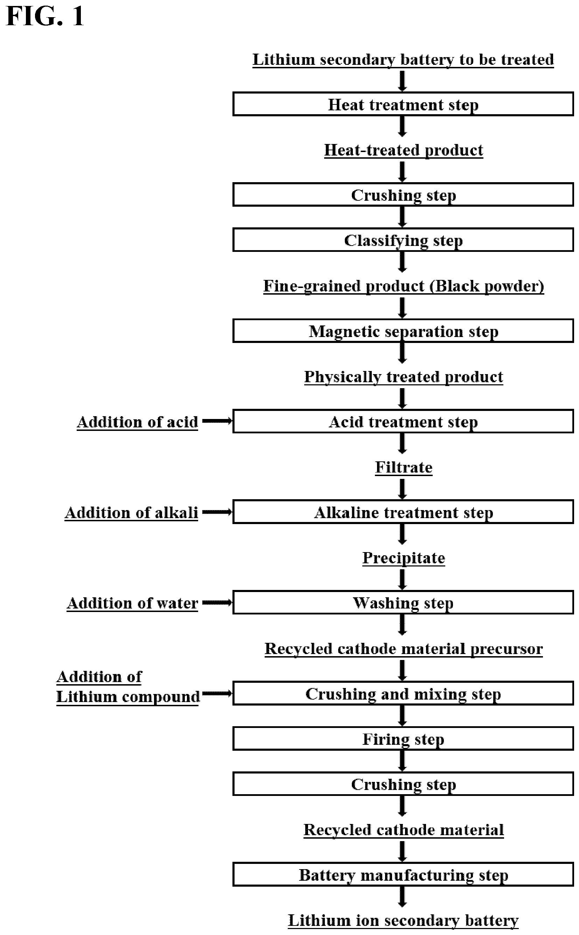

Hereinafter, a method for manufacturing a recycled cathode material precursor and a recycled cathode material, which are modes for executing the present invention, will be described with reference to FIG. 1, which is a flow chart of the manufacture of them.

"...to..." indicates a predetermined numerical value or more and a predetermined numerical value or less. This embodiment will be described in the following order.

1. Finding about the present invention related to a manufacturing method of the present invention

2. LIB, which is an object to be treated

3. Method for manufacturing a recycled cathode material precursor

3-1. Heat treatment step

3-2. Crushing step
3-3. Classifying step
3-4. Magnetic separation step
3-5. Acid treatment step
3-6. Alkaline treatment step
3-7. Washing step

4. Method for manufacturing a recycled cathode material

4-1. Lithium salt addition step
4-2. Crushing and mixing step
4-3. Firing step
4-4. Crushing step

5. Method for manufacturing recycled LIB
6. Findings about the invention related to the recycled LIB and related products of the present invention
7. Recycled cathode material precursor
8. Recycled cathode material
9. Physically treated product before acid treatment step (after replenishment)
10. Definition reflecting the simplicity of each manufacture method in this embodiment

[1. Finding about the present invention related to a manufacture method of the present invention]

In order to solve the problem of the present invention, the present inventors conducted extensive studies. As a result, the following method was conceived.
As a countermeasure for automatically and safely extracting a cathode active material from waste LIB cells in a time efficient manner, each waste LIB cell is subjected to heat treatment. Due to this heat treatment, a LIB laminate in the cell is made electrically and chemically harmless, thus significantly reducing the risk of disaster.
By mechanically and magnetically recovering the cathode active material from the heat-treated LIB laminate, it is possible to increase the content of, for example, Ni, Co, and Mn in a pyrolysis residue. The pyrolysis residue enriched with Ni, Co, and Mn can be converted into a mixture of hydroxides of Ni, Co, and Mn (eg, a cathode active material precursor).
By adopting this method, the cathode active material can be extracted from the LIB laminate in a time efficient and safe manner by an electrically and chemically harmless method without performing complicated mechanical decomposition. These advantages can bring the benefit of being able to automate the treatment of the waste LIB. Hereinafter, the LIB laminate may be simply referred to as LIB.

[2. LIB, which is an object to be treated]

The LIB, which is the object to be treated, is not particularly limited and can be appropriately selected depending on the purpose, and examples of the LIB includes: defective LIB that occurred during the LIB manufacturing step, LIB that is discarded due to a defect in the used equipment, the end of the life of the used equipment, etc., used LIB discarded at the end of its life, etc.
LIB is a secondary battery that is charged and discharged by moving lithium ions between a cathode and an anode, and examples of the LIB includes: the one equipped with a cathode, an anode, a separator, an electrolyte (electrolytic solution containing an organic solvent or a solid electrolyte), and an outer container that is a battery case.
The shape, structure, size, material, etc., of the LIB to be treated are not particularly limited, and can be appropriately selected depending on the purpose. Examples of the shape of the LIB include a laminate type, a cylindrical type, a button type, a coin type, a square type, and a flat type.
The cathode is not particularly limited as long as it has a cathode material on a cathode current collector, and can be appropriately selected depending on the purpose. The shape of the cathode is not particularly limited and can be appropriately selected depending on the purpose. Examples thereof include a flat plate shape and a sheet shape.
The shape, structure, size, material, etc., of the cathode current collector are not particularly limited, and can be appropriately selected depending on the purpose. Examples of the shape of the cathode current collector include a foil shape. Examples of materials for the cathode current collector include stainless steel, nickel, aluminum, copper, titanium, and tantalum. Among these, aluminum is frequently used.
Composing members of the cathode material can be appropriately selected depending on the purpose, and examples thereof include: a cathode material containing at least a cathode active material containing a rare valuable substance, optionally containing a conductive agent and a binder resin, etc. The rare and valuable material is not particularly limited and can be appropriately selected depending on the purpose, but cobalt, nickel, and manganese are frequently used.

The positive electrode active material may be lithium transition metal oxide (LTMO). Examples of LTMO include: lithium cobaltate ($LiCoO_2$), lithium nickelate ($LiNiO_2$), lithium manganate ($LiMn_2O_4$), lithium cobalt nickelate ($LiCo_{1/2}Ni_{1/2}O_2$), ternary material ($LiNixCoyMnzO_2$ based on NCM) (where x+y+z=1 and x, y, z each > 0 and < 1), (hereinafter, those containing Li are also referred to as NCM.), nickel-based materials ($LiNixCoyAlzO_2$ based on NCA) (where x+y+z=1 and x, y, z are each greater than 0 and less than 1), or a composite of any combination of each, etc.

Among them, $LiNi_{1/3}Co_{1/3}Mn_{1/3}O_2$, which is the NCM and contains equal amounts of Ni, Co, and Mn (x=y=z=1/3), exhibits good Li ion extraction/insertion property when used as a cathode material for LIB. This is suitable for automotive applications.

On the other hand, Ni in ternary LTMO is useful for providing high specific capacity with slow Li ion extraction/insertion in a low charge/discharge current density cell. $LiNi_{0.5}Co_{0.2}Mn_{0.3}O_2$, $LiNi_{0.6}Co_{0.2}Mn_{0.2}O_2$, and $LiNi_{0.8}Co_{0.1}Mn_{0.1}O_2$ are also expected as the cathode active material for LIB batteries for automobiles such as BEV and PHEV.

The conductive agent is not particularly limited and can be appropriately selected depending on the purpose. Examples thereof include carbon black, graphite, carbon fiber, metal carbide, etc.

The binder resin is not particularly limited and can be appropriately selected depending on the purpose, and examples thereof include: vinylidene fluoride, ethylene tetrafluoride, acrylonitrile, homopolymers or copolymers of ethylene oxide, styrenebutadiene rubber, etc.

The anode is not particularly limited as long as it has an anode material on the anode current collector, and can be appropriately selected depending on the purpose. The shape of the anode is not particularly limited and can be appropriately selected depending on the purpose. Examples thereof include a flat plate shape and a sheet shape.

The shape, structure, size, material, etc., of the anode current collector are not particularly limited, and can be appropriately selected depending on the purpose. Examples of the shape of the anode current collector include a foil shape. Examples of materials for the anode current collector include stainless steel, nickel, aluminum, copper, titanium, tantalum, etc. Among these, copper is frequently used.

The anode material is not particularly limited and can be appropriately selected depending on the purpose, and examples thereof include: carbon materials such as graphite and hard carbon, titanate, silicon, and their composites, etc.

The cathode current collector and the anode current collector have a laminate structure, and the laminate is not particularly limited and can be appropriately selected depending on the purpose.

[3. Method for manufacturing a recycled cathode material precursor] (3-1. Heat treatment step)

As shown in FIG. 1, first, a heat treatment step is performed to the LIB to be treated. There is no particular restriction on the heat treatment temperature of the cathode current collector and the anode current collector, as long as the temperature is equal to or higher than a melting point of the current collector having a lower melting point, and less than a melting point of the current collector having a higher melting point, and can be selected appropriately depending on the purpose. However, 670°C or higher is preferable, 670°C or higher and 1100°C or lower is more preferable, 700°C or higher is even more preferable, and 700°C or higher and 900°C or lower is particularly preferable. When the heat treatment temperature is 670°C or higher, embrittlement of the low-melting-point current collector occurs sufficiently, and when the heat treatment temperature is 1100°C or lower, embrittlement can be suppressed in all of the low-melting point current collector, high-melting-point current collector, and outer container, and separating efficiency of the current collector and outer container by crushing and classifying can be maintained. Further, when the outer container of the LIB is melted during the heat treatment, by disposing a catch pan under the LIB for recovering the melted metal, the metal derived from the outer container and an electrode portion can be easily separated from each other.

By performing heat treatment at a predetermined heat treatment temperature, for example, the cathode current collector comprising aluminum foil becomes brittle in a laminate in which the cathode current collector is aluminum and the anode current collector is copper, and tends to be fine-grained in the crushing step described later. This embrittlement of the cathode current collector is caused by melting or oxidation reaction. Further, the aluminum that melts and runs down is recovered in the catch pan. On the other hand, the anode current collector comprising copper does not melt, due to being subjected to heat treatment at a temperature less than the melting point of copper, and therefore can be highly separated in a dry magnetic separation step described later. Further, when either the laminate or LIB is subjected to heat treatment, in a state of being stored in an oxygen shielding container, the cathode current collector comprising aluminum foil melts and becomes brittle, thus making it easy to become fine grains in the crushing step described later. On the other hand, the anode current collector comprising copper is not embrittled by oxidation, because the heat treatment is performed in a state where an oxygen partial pressure is low due to an oxygen shielding effect of the oxygen shielding container and a reduction effect by the anode active material such as carbon contained in the laminate or LIB.

Therefore, by crushing in the crushing step, the cathode current collector is finely crushed, and the anode current collector remains as coarse particles even after crushing, and more effective and advanced classification can be achieved in a classifying and separating step described later.

The heat treatment time is not particularly limited and can be appropriately selected depending on the purpose, and may be 1 minute or more, or 5 hours or less, 2 hours or less, or 1 hour or less. The heat treatment time may be determined to be the time during which the low-melting-point current collector reaches a desired temperature, and a holding time may be short. When the heat treatment time is within a particularly preferable range, it is advantageous in terms of a cost required for the heat treatment.

A heat treatment method is not particularly limited and can be appropriately selected depending on the purpose. For example, a heat treatment furnace can be used. examples of the heat treatment furnace include: rotary kilns, fluidized bed furnaces, tunnel furnaces, batch type furnaces such as muffles, cupola furnaces, and stoker furnaces.

The atmosphere used for the heat treatment is not particularly limited, and can be performed in the air, so as to be appropriately selected depending on the purpose. However, an atmosphere with a low oxygen concentration is preferable because the metal derived from the cathode current collector and the metal derived from the anode current collector can be recovered with high quality and high recovery rate.

As a method for realizing the low-oxygen atmosphere, the LIB or the laminate may be subjected to heat treatment in the state of being housed in the oxygen shielding container. The material of the oxygen shielding container is not particularly limited as long as it is a material that does not melt at the heat treatment temperature described above, and can be appropriately selected depending on the purpose, and examples thereof include iron and stainless steel, etc. The oxygen shielding container preferably includes an opening to release gas pressure caused by electrolyte combustion in the lithium ion battery or laminate. Preferably, an opening area of the opening is 12.5% or less of a surface area of the outer container that includes the opening. More preferably, the opening area of the opening is 6.3% or less of the surface area of the outer container that includes the opening. If the opening area of the opening exceeds 12.5% of the surface area of the outer container, most of the current collector is likely to be oxidized by the heat treatment. The shape, size, formation location, etc., of the opening are not particularly limited, and can be appropriately selected depending on the purpose.

As a result, all that is required is that the LIB or laminate can be subjected to heat treatment at high temperature (eg, 800°C) and in oxygen-free or low-oxygen conditions. Therefore, even in the case of not using the oxygen shielding container, the LIB may be subjected to heat treatment in the heat treatment furnace after air supply is blocked or an air supply amount is reduced (eg, 11% or less in terms of oxygen concentration).

Here, if desired, it is also preferable to perform qualitative and quantitative analysis of the metal element contained in the heat-treated product obtained in the heat treatment step, using fluorescent X-ray analysis, etc. This is because difference may occur in the metal components contained in the heat-treated product depending on the LIB to be treated.

Based on the result of this qualitative and quantitative analysis, it is preferable that heat-treated products having similar metal component compositions are grouped, and the heat-treated products divided into groups are sent to the crushing step described later, from a viewpoint of stabilizing the composition of the metal components of the recycled cathode material.

(3-2. Crushing step)

Next, the crushing step is performed for crushing the heat-treated product obtained in the heat treatment step. In the crushing step, the heat-treated product is preferably crushed by impact to obtain a crushed product.

The crushing method is not particularly limited and can be appropriately selected depending on the purpose, and examples of the crushing method by impact includes: a method of throwing with a rotating striking plate and striking it against an impact plate to give an impact, or a method of hitting the heat-treated product with a rotating striker (beater), which can be performed, for example, with a hammer crusher, a chain crusher, etc. The method for crushing by impact also includes a method of hitting the heat-treated product with balls or rods of ceramics, iron, etc., which can be performed with a ball mill, a rod mill, etc. The heat-treated product can also be crushed by a twin-screw crusher having a short blade width and blade length for crushing by compression.

By obtaining the crushed product by impact, the crushing of the active material and the low-melting-point current collector is promoted, while the high-melting-point current collector whose shape has not changed remarkably exists in a form such as a foil. Therefore, in the crushing step, the fine crushing of the high-melting-point current collector is more difficult than that of the low-melting-point current collector, with the high-melting-point current collector remained to be simply cut, and therefore it is possible to obtain a crushed product in a state that the low-melting-point current collector and the high-melting-point current collector can be efficiently separated in the classifying and separating step described later.

The crushing time is not particularly limited and can be appropriately selected depending on the purpose.

However, the treatment time per kg of LIB is preferably 1 second or more and 30 minutes or less, more preferably 2 seconds or more and 10 minutes or less, and particularly preferably 3 seconds or more and 5 minutes or less. If the crushing time is less than 1 second, the current collector may not be crushed, and if it exceeds 30 minutes, the current collector may be excessively crushed. A maximum particle size of the crushed product is preferably 10 mm or less.

(3-3. Classifying and separating step)

Next, a classifying and separating step can be performed as a physical separating step, which is a step of classifying the crushed product obtained in the crushing step, into coarse-grained products and fine-grained products. The classification method is not particularly limited, and can be appropriately selected depending on the purpose, and examples thereof include: vibrating sieve, multistage vibrating sieve, cyclone, JIS Z8801 standard sieve, wet vibration table, air table, etc.

A classification point used in the classifying and separating step can be appropriately selected depending on the purpose as long as it is 0.45 mm or more. For example, it is desirable to use the classification point of 0.6 to 2.4 mm. If the classification point exceeds 2.4 mm, in some cases, inclusion of the metal derived from the outer container and the metal having a higher melting point into the fine-grained product is increased, which may reduce the performance of separation from the cobalt and nickel derived from the active material. On the other hand, if the classification point is less than 0.6 mm, inclusion of the metal from the low-melting-point current collector and the active material into the coarse-grained product is increased, and the metal derived from the high-melting-point current collector in the coarse-grained product is degraded, and the recovery of cobalt/nickel from the active material into the fine-grained product may be less than 60%. Further, when using a sieve as a classification method, by sieving with a crushing accelerator such as stainless steel balls and alumina balls on the sieve, small crushed products adhering to large crushed products are separated from the large crushed products, thus enabling the large and small products to be efficiently separated. This makes it possible to further improve the quality of the recovered metal. The crushing step and the classifying and separating step can also be performed simultaneously. For example, it is also acceptable to perform a (crushing/classifying) step of classifying the crushed product into coarse-grained products and fine-grained products while crushing the heat-treated product obtained in the heat treatment step.

By the classification described above, the metal derived from the outer container and the high-melting-point current collector can be recovered as coarse-grained products, and cobalt/nickel/lithium derived from the active material can be recovered as fine-grained products (black mass (also called black powder)). The fine-grained products may be classified again. By removing fine particles of, for example, 150 $\mu$m or less from the fine-grained products in this second classification, it is possible to reduce an amount of the anode active material contained in the non-magnetic substances obtained by wet magnetic separation (hereinafter also referred to as a magnetic separation).

(3-4. Magnetic separation step)

As a physical separating step, a dry magnetic separation step can be performed to the crushed product obtained in the crushing step or the coarse-grained product obtained in the classifying and separating step. Iron is recovered as a magnetic substance, and an anode current collector-derived metal such as copper is recovered as a non-magnetic substance.

As the physical separating step, a wet magnetic separation step (wet magnetic separation) can be preferably performed to the crushed product obtained in the crushing step or the fine-grained product (black mass) obtained in the classifying and separating step. Cobalt and nickel are recovered as magnetic substances. In the case of dry magnetic separation when magnetically separating the fine-grained product obtained in the classifying and separating step, adhesion moisture between particles causes aggregation of particles, and the anode active material fine particles and the cobalt/nickel particles, which are contained in the anode current collector-derived metal particles and the fine-grained product in an amount of 10% or more, cannot be sufficiently separated. According to the present invention, in the wet magnetic separation step, the substance derived from the anode active material and the metal derived from the anode current collector are separated into a non-magnetic product slurry, and cobalt and nickel are recovered as magnetic substances, to obtain a physically treated product. Manganese is not ferromagnetic at room temperature but when cobalt and nickel are magnetically separated, manganese is also separated together with cobalt and nickel, in the case of forming a composite oxide with cobalt and nickel in LIB. Therefore, a considerable amount of manganese is also recovered by magnetic separation. The magnetic force for magnetic separation is preferably 1500 to 8000G.

(3-5. Acid treatment step)

This is a step of adding an acid such as HCl, HNOs, $H_2SO_4$, etc., to the physically treated product to dissolve the metal element in the acid solution.

For example, after adding acid, the physically treated material is heated at 20 to 180°C for 0.1 to 3 hours to thermally decompose the metal element in the physically treated product and dissolve them in the acid solution. After thermal decomposition is completed, the acid solution is allowed to cool, and is filtered to remove undissolved residues in the acid solution, to recover a filtrate. HCl, $HNO_3$, $H_2SO_4$, etc., can be used as the acid. Further, it is also acceptable to employ a configuration in which HCl is added to the physically treated product and heated, and then $HNO_3$ is added and heated.

As a filtering method, various methods such as membrane filter, filter paper, and centrifugal separation can be used. Further, it is also preferable to use cross-flow filtration.

(3-6. Alkaline treatment step)

This is a step of mixing the recovered filtrate (acid-treated solution) with an alkaline solution to adjust a pH value to 9 to 14, to generate the metal element in the filtrate as a hydroxide precipitate. The above acid treatment step and this step may be collectively called a hydrometallurgical step.

For example, 0.5 to 10 mol/L NaOH aqueous solution is added as an alkaline solution to the recovered filtrate to adjust the pH value of the filtrate to 11 to 12 to generate the hydroxide precipitate. After addition of alkali, the filtrate may be filtered to recover a hydroxide precipitate.

As a filtering method, various methods such as a membrane filter and filter paper can be used. It is also preferable to use cross-flow filtration.

(3-7. Washing step)

This is a step of washing the recovered hydroxide precipitate to obtain a recycled cathode material precursor according to the present invention.

For example, the recovered hydroxide precipitate is heated at 20 to 200°C for 0.1 to 48 hours and then dried under high heat to obtain a dried product. The dried product is crushed to obtain a crushed product. Water of the same amount to 10 times the amount (by weight) is added to the crushed product to obtain a slurry. The slurry is filtered to recover the hydroxide precipitate.

As a filtering method, various methods such as membrane filter, filter paper, and centrifugal separation can be used. It is also preferable to use cross-flow filtration.

The recovered hydroxide precipitate may be heated to 20 to 200°C for 0.1 to 48 hours and dried to obtain a recycled cathode material precursor according to the present invention.

Here, if desired, it is also preferable to perform qualitative and quantitative analysis of the metal element contained in the recycled cathode material precursor by ICP analysis or fluorescent X-ray analysis. This is because there may be a difference in the metal components contained in the recycled cathode material precursor depending on the LIB to be treated, and there may be a difference in the metal components contained in the recycled cathode material precursor depending on the step conditions up to this point.

This qualitative and quantitative analysis reveals that in the recycled cathode material, which will be described later, when there is a difference between the composition of a target metal element functioning as a cathode material and the composition of the metal element functioning as a cathode material contained in the recycled cathode material precursor, it is also preferable to adjust the composition of the metal element. As a method for adjusting the composition of the metal element, it is conceivable to add a deficient metal element.

[4. Method for manufacturing a recycled cathode material]

Hereinafter, explanation will be given to a method for manufacturing a recycled cathode material, with the recycled cathode material precursor manufactured so far used as a material.

(4-1. Lithium salt addition step)

A lithium source corresponding to 0.5 equivalent or more and 1.5 equivalent or less with respect to a total hydroxide of the metal element functioning as the cathode material contained in the recycled cathode material precursor according to the present invention, may be added to the obtained recycled cathode material precursor according to the present invention. Examples of the lithium source include: lithium carbonate, lithium hydroxide, lithium nitrate, and lithium chloride. This step may also be referred to as a recycled cathode material manufacturing step of mixing a recycled cathode material precursor and a predetermined amount of lithium source to manufacture a recycled cathode material.

(4-2. Crushing and mixing step)

For example, the recycled cathode material precursor according to the present invention to which a predetermined amount of lithium carbonate has been added may be crushed using a disc mill to obtain a crushed mixture (mixed powder). Bead mills, rocking mills, mixer mills, etc., can also be used.

(4-3. Firing step)

For example, the obtained crushed mixture may be fired in an alumina crucible under conditions of 600°C for 1 hour and then 800°C for 4 hours to obtain a fired product. The holding temperature in firing is preferably 650°C to 900°C. The holding time is 0.1 to 20 hours, preferably 0.5 to 8 hours.

(4-4. Crushing step)

The obtained fired product is crushed using, for example, a disk mill, etc., to obtain a recycled cathode material according to the present invention, which is a fired product of a mixture of the recycled cathode material precursor according to the present invention and a lithium compound. Bead mills, rocking mills, mixer mills, etc. can also be used.

[5. Method for manufacturing a recycled LIB]

The LIB of the present invention can be manufactured by a known method, using the recycled cathode material of the present invention.

The recycled LIB according to this embodiment is a LIB including a cathode, an anode, and a separator, and the cathode is composed of the recycled cathode material described in this embodiment.

When a metal functioning as a cathode and being deficient is found in the stage of manufacturing the recycled cathode material precursor or the recycled cathode material, it is a preferable to replenish the deficient metal as appropriate.

The above description focuses on the (manufacturing) method in the present invention. The following description focuses on the recycled LIB and its related materials (recycled cathode material precursor, recycled cathode material, etc.) according to the present invention.

[6. Findings about inventions related to the recycled LIB and related products of the present invention]

According to the (manufacturing) method described so far, mainly cell-derived metals such as aluminum (Al) derived from a cathode current collector in the LIB laminate in the cell of the waste LIB, copper (Cu) derived from an anode current collector and a cell line conductor, and iron (Fe) derived from a cell package and a fixture, are mixed into the recycled cathode material (precursor). On that basis, Al, Cu, and Fe are sometimes referred to as metal impurities in the present specification.

On the other hand, as shown in examples below, in the case of at least the LIB being the NCM, the electrochemical performance of the ternary LTMO cathode is not affected even if several percents of Al, Cu, and Fe are contained with respect to a total amount of Ni, Co, and Mn. Judging from the fact that performance is maintained in the presence of such metal impurities, the inventors have found that the option of incorporating metal impurities into the recycled cathode material (precursor) and also into the cathode is by no means impractical. Rather, by adopting the recycled LIB manufacturing method according to this embodiment, the cathode active material can be extracted from the LIB laminate in a time-efficient and safe manner and in an electrically and chemically harmless manner without complicated mechanical decomposition, and further, the treatment of the waste LIBs can be automated, thereby making great progress toward sustainable manufacture of the recycled LIBs.

Based on this finding, the present inventors have obtained new finding about a small amount of metal element $\beta$ remaining in the recycled cathode material (precursor) and also in the cathode.

On the other hand, as described as another problem of the present invention, the recycled LIB does not have a good image in terms of a battery performance compared to a new LIB before recycling. Even when manufacturing the recycled LIB, the recycled LIB will spread in the market and a sustainable manufacture of the recycled LIB will become easier to spread by giving an added value (premium) to the recycled LIB in terms of the battery performance, when compared to new. This means that the technique according to this embodiment, for example, can be synergistic with a $CO_2$ reduction effect in the technical field of transportation described above, and can become an environment-related technique of great significance.

As shown in example 1 below, in the LIB in which the recycled cathode material precursor and also the recycled cathode material according to this embodiment are used, high energy density and output density are maintained even after charge-discharge cycles. This is a sufficient added value (premium) in terms of a battery performance.

[7. Recycled cathode material precursor]

The recycled cathode material precursor of this embodiment is a solid matter (solid). In the subsequent steps, the recycled cathode material precursor may be handled as a solid matter, or may be slurried. Even in the case of slurrying, the recycled cathode material precursor contained in the slurry is still solid.

The obtained recycled cathode material precursor is a recycled cathode material precursor containing a metal element $\alpha$ consisting of at least one of nickel, cobalt and manganese, and a metal element $\beta$ consisting of at least one of iron, copper and aluminum.

The "metal element $\alpha$" is a metal element that can be used as a cathode material and is a metal element consisting of at least one of nickel, cobalt and manganese. In other words, the metal element $\alpha$ in this embodiment is one or any combination selected from nickel, cobalt and manganese. This embodiment shows a case in which all three elements of nickel, cobalt and manganese are contained as the metal element $\alpha$ in the recycled cathode material precursor (also in the physically treated product in the previous stage of the precursor, the recycled cathode material manufactured from the precursor). In that case, lithium and the metal element $\alpha$ may be collectively referred to as a "cathode material metal element". This "cathode material metal element" may include other elements (for example, aluminum used in NCA).

The "metal element $\alpha$" includes not only individual metal elements of nickel, cobalt, and manganese, but also each metal element contained in oxide or hydroxide of each metal element (i.e. compound combined with other element). This "oxide" includes each metal oxide and/or composite oxide containing each metal element.

"The mass of the metal element $\alpha$" refers to a total mass of the individual metal element and the metal element contained in the compound. "Content of the metal element $\alpha$" refers to, for example, the ratio (relative value, mass%) of the total mass of the individual metal element and the metal element contained in the compound with respect to the total mass of the physically treated product.

The "metal element $\beta$" is a metal element consisting of at least one of iron, copper and aluminum. In other words, the metal element $\beta$ in this embodiment is one or any combination selected from iron, copper and aluminum. This embodiment shows a case in which all three elements of iron, copper and aluminum are contained as metal element $\beta$ in the recycled cathode material precursor (also in the physically treated product in the preceding stage of the precursor, and the recycled cathode material manufactured from the precursor). In many cases, all three components of copper, iron, and aluminum are contained in the recycling process of a typical LIB cathode material.

The "metal element $\beta$" includes not only the individual metal element such as iron, copper, and aluminum, but also the metal element contained in oxide or hydroxide of each metal element (i.e. compound combined with other element).

"The mass of the metal element $\beta$" refers to a total mass of the individual metal element and the metal element contained in the compound. The "content of the metal element $\beta$" refers to, for example, the ratio (relative value, mass %) of the total mass of the individual metal element and the metal element contained in the compound, with respect to the total mass of the physically treated product.

The metal element $\beta$ is oxidized in the recycled cathode material after firing the recycled cathode material precursor. Specifically, the metal element $\beta$, which was mostly a hydroxide in the recycled cathode material precursor, is now an oxide. Therefore, in the recycled cathode material, the expression $\beta$' consisting of at least one of iron oxide, copper oxide and aluminum oxide is used instead of the metal element $\beta$.

The content of the metal element $\beta$ is 0.5 to 20% by mass in the recycled cathode material precursor. A lower limit may be 1% by mass and 3% by mass. An upper limit may be 15% by mass or 10% by mass. The upper and lower limits may be the same, also in the physically treated product before the acid treatment step. Preferably, the content of the metal element $\alpha$ is 30% by mass or more and the content of the metal element $\beta$ is 6% or less in the recycled cathode material precursor.

Among the metal elements contained in the recycled cathode material precursor, each metal element $\alpha$ may monopolize a topmost metal element (at least 1st place. 1st to 3rd places if nickel, cobalt and manganese are included.) in a descending order of the content. The same applies to the physically treated product before the acid treatment step.

In the recycled cathode material precursor, the main component of the substance (including an individual substance and a compound) containing the metal element $\alpha$ may be the hydroxide of the metal element $\alpha$.

As used herein, the term "main component" refers to a substance containing the elements that compose the metal element $\alpha$ with a highest proportion. For example, when an iron-containing substance in the recycled cathode material precursor is individual cobalt, cobalt hydroxide, or cobalt oxide, and when the cobalt hydroxide contains cobalt in large amount, the cobalt hydroxide will be the main component of the cobalt-containing substance. The same applies to nickel and manganese.

The "main component" in the present specification is preferably a substance containing each element composing

the metal element $\alpha$ in an abundance proportion exceeding 50%. In the case of this embodiment, the main component of the content of each element composing the metal element $\alpha$ is the hydroxide of each element. That is, according to the case of this embodiment, the metal element $\alpha$ is contained in the recycled cathode material precursor, with the hydroxide of the metal element $\alpha$ as a main component. The above definition of the main component can also be applied to the metal element $\beta$.

In the recycled cathode material precursor, the main component of the substances (including simple substances and compounds) containing the metal element $\beta$ may be the hydroxide of the metal element $\beta$. The same applies to copper and aluminum.

Most of each metal element $\alpha$ is oxidized. The oxide is an oxide of each metal element $\alpha$ and/or a composite oxide of each metal element $\alpha$ and lithium, and may be collectively referred to as a compound $\alpha$'. The (composite) oxide is the main component of the substance containing each metal element $\alpha$.

In the recycled cathode material precursor, the value of the content of the metal element $\alpha$/the content of the metal element $\beta$ may exceed 1.5 (or 5.5 or more, 6.0 or more, 6.5 or more, 7.0 or more, 7.5 or more, 8.0 or more, 8.5 or more) as a lower limit, and may be 200 or less (or 100 or less, 50 or less, 30 or less, or 15 or less) as an upper limit.

In this embodiment, although the acid treatment step was followed by the alkaline treatment step, the present invention is not limited thereto. A treatment may be performed to obtain the recycled cathode material precursor in which the content of the metal element $\beta$ is 0.5 to 20% by mass in the recycled cathode material precursor.

An example of a numerical range of each composition based on 100% by mass recycled cathode material precursor of this embodiment is as follows. Numerical ranges in parentheses are preferable examples. The following numerical ranges are defined after satisfying a requirement that the content of the metal element $\beta$ be 0.5 to 20% by mass. It is more preferable that the content of the metal element $\alpha$ satisfies a requirement that the content be 30% by mass or more.

Mn: more than 0 and 25% by mass or less (10 to 25% by mass)
Co: more than 0 and 25% by mass or less (10 to 25% by mass)
Ni: more than 0 and 25% by mass or less (10 to 25% by mass)
Cu: 1% by mass or more and 5% by mass or less (1.5 to 2.5% by mass)
Fe: 1% by mass or more and 3% by mass or less (1.0 to 1.5% by mass)
Al: 1% by mass or more and 3% by mass or less (1.0 to 2.2% by mass)
Na: more than 0 and 0.3% by mass or less (0.010 to 0.3% by mass)
Ca: more than 0 and 0.08% by mass or less (0.03 to 0.08% by mass)
Mg: more than 0 and 0.04% by mass or less (0.02 to 0.04% by mass)
Total of O, C, F: more than 0 and 50% by mass or less (30 to 45% by mass)

The contents of Mn, Co, and Ni are variable according to the values of x, y, and z set in $LiNixCoyMnzO_2$, and the present invention is not limited to the above ranges.

The above numerical range is applicable not only to the recycled cathode material precursor according to this embodiment, but also to the recycled cathode material and the physically treated product described later.

[8. Recycled cathode material]

The recycled cathode material according to this embodiment is a recycled cathode material containing a metal element $\alpha$ (specifically a compound $\alpha$') consisting of at least one of lithium, nickel, cobalt and manganese, and a compound $\beta$' consisting of at least one of iron oxide, copper oxide and aluminum oxide, and the content of the compound $\beta$' is 0.5 to 20% by mass, preferably 1 to 15% by mass, more preferably 3 to 11% by mass in the recycled cathode material.

In the recycled cathode material of this embodiment, the content of the metal element $\alpha$ is preferably 40 to 70% by mass in the recycled cathode material.

Each metal element $\alpha$ may monopolize the topmost (at least first and second) metal elements contained in the recycled cathode material in a descending order of the content.

In the recycled cathode material, the value of the content of the metal element $\alpha$/the content of the metal element $\beta$ may exceed 1.5 (or 5.5 or more, 6.0 or more, 6.5 or more, 7.0 or more, 7.0 or more, 5 or more, 8.0 or more, 8.5 or more) as a lower limit, and may be 200 or less (or 100 or less, 50 or less, 30 or less, or 15 or less) as an upper limit. In the recycled cathode material, the content of the metal element $\alpha$/the content of the compound $\beta$' may be used, or the content of the compound $\alpha$'/the content of the compound $\beta$' may be used, instead of the value of the content of the metal element $\alpha$/the content of the metal element $\beta$. For the numerical range, the above upper limit and lower limit can be selected as appropriate.

When the recycled cathode material according to this embodiment is 100% by mass, an example of the numerical range is also shown in [7. Recycled cathode material precursor]. In the recycled cathode material, Li is preferably 6 to 10% by mass.

[9. Physically treated product before acid treatment step (after replenishment)]

The physically treated product obtained after the magnetic separation step and before the acid treatment step in this embodiment is a solid matter (solid). When physically separating the crushed product to obtain a physically treated product, the metal element α is concentrated in the physically treated product. Also in this physically treated product, each numerical range of the composition for the above-described recycled cathode material precursor can be adopted.

When there is a metal element deficient at the stage of the physically treated product, replenishment of a metal salt, etc., may be performed as a source of the metal element to form the physically treated product. The physically treated product after replenishment is also referred to as a physically treated product before the acid treatment step.

[10. Definition reflecting the simplicity of each manufacturing method in this embodiment]

The difference between mass 1 of each element consisting of the metal element α in the physically treated product before the acid treatment step (meaning the physically treated product subjected to the acid treatment step immediately before the acid treatment step; the same is applied hereinafter), and mass 2 of each element consisting of the metal element α in the recycled cathode material precursor, is preferably 30% or less (or 25% or less, or 20% or less) of mass 1 for each element.

Satisfying the definition described in the above paragraph means, for example, that an operation of extracting only one or two elements of the metal element α is not performed after the acid treatment step of this embodiment. This means that the recycled cathode material precursor (also the recycled cathode material and LIB in which the recycled cathode material is used) can be manufactured from LIB to be treated with a low environmental load and low recycling cost.

For example, when nickel, cobalt, and manganese are contained in the physically treated product and the recycled cathode material precursor, the value of $\{100 \times (mass\ 1 - mass\ 2)/mass\ 1\}$ in nickel is preferably 30 or less (or 25 or less, or 20 or less). The same is preferably applied to cobalt and manganese.

Based on the same viewpoint as this technical idea, it may be defined that the change range when comparing a content ratio 1 between elements composing the metal element α in the physically treated product before the acid treatment step (immediately before the acid treatment step), and a content ratio 2 between elements composing the metal element α in the recycled cathode material precursor, is 30% or less (or 25% or less, or 20% or less).

For example, when nickel, cobalt, and manganese are contained in the physically treated product and the recycled cathode material precursor, with a mass ratio of nickel : cobalt : manganese = $a1 : b1 : c1$ in the physical treated product and nickel : cobalt : manganese = $a2 : b2 : c2$ in the recycled cathode material precursor, the values of $\{100 \times |(b1/a1) - (b2/a2)1/(b1/a1)\}$ and $\{100 \times |(c1/a1)-(c2/a2)|/(c1/a1)\}$ are preferably 30 or less (or 25 or less, or 20 or less). When nickel is not included in this example (i.e. $a1 = a2 = 0$), cobalt or manganese may be set as a denominator, and an element other than the element set as the denominator may be set as a numerator. It is preferable that this definition is satisfied by any combination of the numerator and denominator of each element composing the metal element α.

Similarly to the metal element α, the difference between the mass 3 of the metal element β in the physically treated product before the acid treatment step and the mass 4 of the metal element β in the recycled cathode material precursor is preferably 30% or less (or 25% or less, or 20% or less) of mass 3 for each metal element β.

After the acid treatment step of this embodiment, similarly to the metal element α, also for the metal element β, the operation of extracting only one or two elements of the metal element β is not performed. The definition in the above paragraph means that no such extraction work has been performed. This means that the recycled cathode material precursor (also the recycled cathode material and LIB in which the recycled cathode material is used) can be manufactured from LIB, which is an object to be treated, with a little environmental load and low recycling cost.

Based on the same viewpoint as this technical idea, it may be defined that the change range when comparing the content ratio 3 between elements composing the metal element β in the physically treated product before the acid treatment step (immediately before the acid treatment step), and the content ratio 4 between elements composing the metal element β in the recycled cathode material precursor, is 30% or less (or 25% or less, or 20% or less).

For example, when the physically treated product and the recycled cathode material precursor contain iron, copper, and aluminum, with the mass ratio of iron : copper : aluminum = $d1 : e1 : f1$ in the physically treated material and the mass ratio of iron : copper : aluminum = $d2 : e2 : f2$ in the recycled cathode material precursor, the values of $\{100 \times |(e1/d1)-(e2/d2)|/(e1/d1)\}$ and $\{100 \times |(f1/d1)-(f2/d2)|/(f1/d1)\}$ are preferably 30 or less (or 25 or less, or 20 or less). It is preferable that this definition is satisfied by any combination of the numerator and denominator of each element composing the metal element β. When no iron is contained in this example (i.e. $d1 = d2 = 0$), copper or aluminum may be set as the denominator, and an element other than the element set as the denominator, may be set as the numerator.

The following content is defined by the content ratio of the metal element α and the metal element β in one substance, from the same viewpoint as the above technical idea.

"When comparing the content ratio 5 of the metal element $\alpha$ and the metal element $\beta$ in the physically treated product before the acid treatment step, and the content ratio 6 of the metal element $\alpha$ and the metal element $\beta$ in the recycled cathode material precursor, the change range is 30% or less (or 25% or less, 20% or less, 15% or less, 10% or less, or 5% or less)."

For example, explanation will be given on the assumption that nickel, cobalt, and manganese are contained in the physically treated product and the recycled cathode material precursor, and iron, copper, and aluminum are contained in the physically treated product and the recycled positive electrode material precursor. In the physically treated material, when the mass ratio of the content of the metal element $\alpha$ : the content of the metal element $\beta$ (i.e., the mass ratio of both contents) is X1 : Y1, and when the mass ratio of the content of the metal element $\alpha$ : the content of the metal element $\beta$ in the recycled cathode material precursor is X2 : Y2, the value of $\{100 \times |(X1/Y1)-(X2/Y2)|/(X1/Y1)\}$ is preferably 30 or less (or 25 or less, 20 or less, 15 or less, 10 or less, or 5 or less).

On the other hand, lithium dissolves in the liquid during slurrying and wet magnetic separation of the raw material, and is separated into a non-magnetic product slurry. By solid-liquid separation of this non-magnetic slurry, the anode current collector-derived metal and the anode active material can be separated into residues. Further, carbon dioxide gas is blown into the liquid separated by solid-liquid separation to obtain a precipitate of lithium carbonate, and lithium is recovered. Before the blowing of the carbon dioxide gas, a pretreatment step such as a step of removing impurities or a step of concentrating the liquid for the purpose of increasing the lithium concentration may be performed. On the other hand, for example, fluorine is recovered in the remaining liquid. Therefore, the fluorine content in the physically treated product can be less than 1%. Leaching is required to recover lithium and separate fluorine from cobalt-nickel, but according to the present invention, in the wet magnetic separation step, the number of steps can be reduced because water leaching of lithium, leaching and removal of fluorine, and separation of the anode current collector-derived metal-cobalt/nickel can be performed at the same time.

Here, when there is a difference between the composition of the metal element that functions as a target cathode material in the recycled cathode material precursor and recycled cathode material, and the composition of the metal element that functions as the cathode material contained in the physically treated product, it is also preferable to adjust the composition of the metal elements. As a method for adjusting the composition of the metal element, it is conceivable to appropriately prepare the physically treated product having a different metal element composition, to add a deficient metal element, etc. A specific addition amount may be determined based on the results of qualitative and quantitative analysis of the metal element contained in the physically treated product by ICP analysis or fluorescent X-ray analysis.

Examples

Hereinafter, the present invention will be described more specifically with reference to examples. However, the present invention is not limited to these examples. Hereinafter, the recycled cathode material according to the example will be referred to as "W-NCM", and a commercially available cathode material according to the comparative example will be referred to as "NCM".

(Example 1) 1. Manufacture of the recycled cathode material precursor and the recycled cathode material <heat treatment step>

A heat-treated product was obtained by applying heat treatment to a LIB battery pack (approximately 75 kg) to be treated at a heat treatment temperature of 800°C (held for 2 hours after heating over 1 hour). As a heat treatment apparatus, a batch type burner furnace manufactured by Ecosystem Akita Co., Ltd. was used. At the time of the heat treatment, although the inside of the furnace was set to an air atmosphere at the start of the heat treatment, the heat treatment was performed, with supply of air shut off.

<Crushing step>

Subsequently, the heat-treated product (heat-treated LIB) obtained in the heat treatment step is crushed using a hammer crusher (Makino swing hammer crusher HC-20-3.7, manufactured by Makino Sangyo Co., Ltd.) as a crushing device, under conditions of 50 Hz (hammer peripheral speed 38 m/sec) and a screen at an exit part having a rostle type opening hole of 30 mm $\times$ 200 mm, to obtain a crushed product of LIB.

<Classifying and separating step>

Subsequently, the crushed LIB was sieved and separated into a sieved product (coarse-grained product) and a sieved product (medium-grained product), using a sieve with a sieve opening of 1.2 mm (diameter 200 mm, manufactured by Tokyo Screen Co., Ltd.). The crushed product according to example 1 was obtained as a sieved product (medium-grained product). The composition table of the crushed product is shown below. Hereinafter, the composition table are tables obtained by ICP analysis. ICP analysis was performed using iCAP6300Duo manufactured by Thermo Fisher Scientific (the same applies to ICP analysis hereinafter).

[Table 1]

| Element | Mn (mass%) | Co (mass%) | Ni (mass%) | Li (mass%) | Cu (mass%) | Fe (mass%) | Al (mass%) | C (mass%) | Insoluble residue (mass%) |
|---|---|---|---|---|---|---|---|---|---|
| Analysis value | 10.2 | 10.9 | 14.1 | 3.2 | 1.6 | 0.7 | 6.0 | 35.1 | 36.3 |

<Magnetic separation step>

The crushed product according to example 1 was subjected to wet magnetic separation using a drum type magnetic separator at a magnetic force of 1500 G, a drum rotation speed of 45 rpm, a solid-liquid ratio of 10%, and a slurry supply rate of 100 ml/min, to recover a physically treated product according to example 1. The composition table of the physically treated product (crushed product after magnetic separation) is shown below. In Table 2 compared to Table 1, the contents (% by mass) of nickel, cobalt and manganese (that is, metal element $\alpha$) are increased. That is, the metal element $\alpha$ is concentrated by this step.

[Table 2]

| Element | Mn (mass%) | Co (mass%) | Ni (mass%) | Li (mass%) | Cu (mass%) | Fe (mass%) | Al (mass%) | C (mass%) | Insoluble residue (mass%) |
|---|---|---|---|---|---|---|---|---|---|
| Analysis value | 21.1 | 23.3 | 22.3 | 1.1 | 2.8 | 1.4 | 2.3 | 15.1 | 12.0 |

<Acid treatment step>

5g of the obtained physically treated product according to example 1 was put into a 500 mL conical beaker, and 100 mL of hydrochloric acid (12 N) was added. Then, the mixture was thermally decomposed using a hot plate at 70 to 100°C for 1 hour. After a reaction had subsided, 100 mL of ion-exchanged water was added, and then 100 mL of $HNO_3$ (14N) was added to obtain an acid solution. Then, the mixture was thermally decomposed for 1 hour until the reaction subsided, using a hot plate at 160°C. After allowing the acid solution to cool, undissolved residues in the acid solution were removed using No. 5C filter paper, to recover a filtrate. The composition table of the filtrate is shown below.

[Table 3]

| Element | Mn | Co | Ni | Li | Cu | Fe | Al |
|---|---|---|---|---|---|---|---|
| | (mg/L) | (mg/L) | (mg/L) | (mg/L) | (mg/L) | (mg/L) | (mg/L) |
| Analysis value | 3370 | 3040 | 3380 | 96.7 | 398 | 151 | 301 |

<Alkaline treatment step>

NaOH aqueous solution with a concentration of about 7.5 % by mass was added to the recovered filtrate, and a pH value was adjusted to 11 to 12, to precipitate hydroxide. Then, the hydroxide was recovered using No. 5C filter paper. The recovered hydroxide was dried in a constant temperature bath at 105°C, crushed in a mortar, poured into a sufficient amount of deionized water, and water-soluble salts were removed by washing. The water-washed hydroxide was recovered using No. 5C filter paper and dried in a constant temperature bath at 105°C, to obtain a recycled cathode material precursor according to example 1. The composition table of the recycled cathode material precursor is shown below.

[Table 4]

| Element | Mn | Co | Ni | Cu | Fe | Al |
|---|---|---|---|---|---|---|
| | (mass%) | (mass%) | (mass%) | (mass%) | (mass%) | (mass%) |
| Analysis value | 17.4 | 15.5 | 16.6 | 2.0 | 1.2 | 1.8 |

In this example, nickel, cobalt, and manganese are contained in both the physically treated product and the recycled cathode material precursor. Further, iron, copper, and aluminum are contained in both the physically treated product and the recycled cathode material precursor.

Lithium carbonate corresponding to 0.9 to 1.1 equivalents with respect to a total of hydroxides of cobalt, nickel and manganese, which were contained, was added to the recycled cathode material precursor according to example 1, and the mixture was crushed and mixed using a disc mill, to obtain a crushed mixture. The crushed mixture was placed in an alumina crucible and fired in an air atmosphere at 600°C for 1 hour and then at 800°C for 4 hours, to obtain a fired product. The fired product was crushed using a disk mill to obtain a recycled cathode material according to example 1. The composition table of the recycled cathode material is shown below.

Further, when the recycled cathode material according to example 1 was analyzed by XRF (manufactured by Rigaku, ZSX Primus II), it was found that cobalt, nickel, and manganese, which were metal elements (metal element $\alpha$ in this example) functioning as a cathode material, were contained as oxides in a total of 86% by mass. On the other hand, it was also found that copper, iron, and aluminum, which were metal elements $\beta$, were contained as CuO in an amount of 3.7% by mass, as $Fe_2O_3$ in an amount of 2.5% by mass, and as $Al_2O_3$ in an amount of 3.6% by mass.

Example 1 satisfies [10. Definition reflecting the simplicity of each manufacture method in the present embodiment] entirely.

[Table 5]

| Element | Mn | Co | Ni | Li | Cu | Fe | Al |
|---|---|---|---|---|---|---|---|
| | (mass%) | (mass%) | (mass%) | (mass%) | (mass%) | (mass%) | (mass%) |
| Analysis value | 13.4 | 12.3 | 13.4 | 9.3 | 1.7 | 1.0 | 1.3 |

2. Manufacture of battery

(1) Manufacture of cathode

Prepared were the recycled cathode material according to example 1 as an active material, acetylene black as a conductive aid, polyvinylidene fluoride as a binder, and N-methylpyrrolidone as a solvent.

Then, the recycled cathode material: acetylene black: polyvinylidene fluoride were mixed at a ratio of 80 : 10 : 10 (% by mass) to obtain a mixture. N-methylpyrrolidone was added to the mixture to obtain a slurry. An amount of N-methylpyrrolidone added to the mixture was such that the mixture : N-methylpyrrolidone = 1 : 1.25 in mass ratio.

After stirring the obtained slurry with a stirrer for 10 minutes, the slurry was applied using a baker-type applicator to obtain a coated product, which was dried in a drier at 100°C. Then, after the dried coated product was subjected to 4t pressing, a cathode was manufactured by punching with a diameter of 15 mm.

(2) Manufacture of anode

Graphite as an active material, acetylene black as a conductive agent, carboxymethylcellulose/styrene-butadiene rubber as a binder, and pure water as a solvent were prepared.

Then, they were mixed, at a ratio of graphite : acetylene black : carboxymethylcellulose/styrene-butadiene rubber = 90 : 5 : 2.5 : 2.5 (% by mass) to obtain a mixture. Distilled water was added to the mixture to obtain a slurry. An amount of the distilled water added to the mixture was such that the mixture : distilled water = 1 : 1.6 in mass ratio.

The obtained slurry was subjected to stirring, coating, drying, pressing and punching in the same manner as in the manufacture of the cathode described above to manufacture an anode.

(3) Assembly of battery

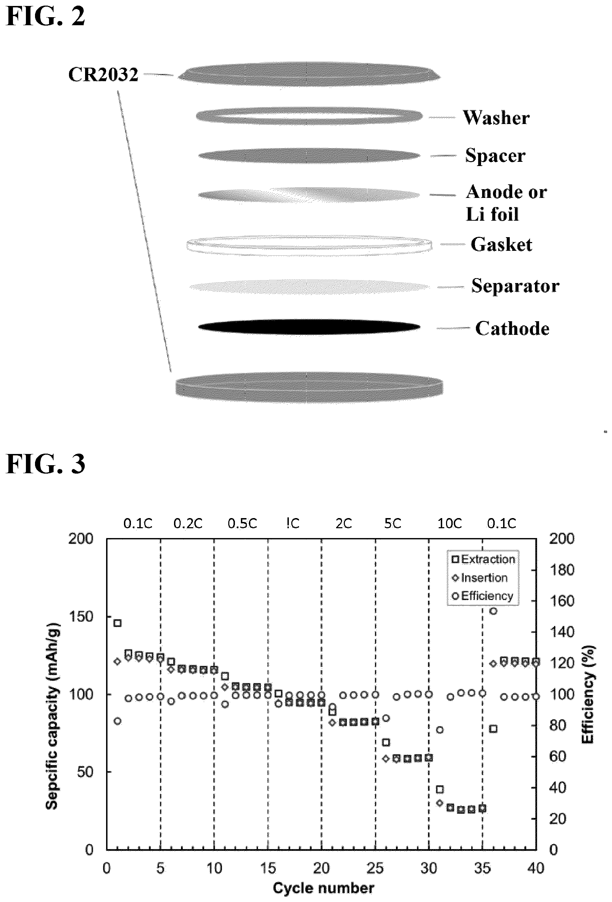

As shown in FIG. 2, the cathode, separator, gasket, anode (full-cell) or lithium metal foil (half-cell), spacer, and washer were laminated in this order, using a CR2032 type coin cell in a glove box filled with pure argon gas, to assemble a half-cell and a full-cell according to example 1. However, in the case of the half-cell, a lithium metal foil was used, and in the case of the full-cell, the above anode was used, with graphite as an active material. The estimated specific capacity of the graphite was 340 mAh/g.

"/g" may be written as "g$^{-1}$".

A porous polypropylene having a diameter of 19 mm was used as the separator, $LiPF_6$ having a concentration of 1 mol/L was used as the electrolyte, and ethylene carbonate + diethyl carbonate (volume ratio 1 : 1) was used as the solvent.

In the case of the half-cell, the estimated specific capacity of the recycled cathode material was 150 mAh/g.

In the case of the full-cell, the estimated specific capacity of the recycled cathode material was 120 mAh/g. The ratio (NP ratio) of the anode capacity to the cathode capacity when assembling the full-cell was 1.2.

3. Battery charge/discharge test

A charge/discharge test by a rate test and a cycle test was performed to the manufactured half-cell and full-cell according to example 1, to measure the charge/discharge specific capacity and coulombic efficiency (charge/discharge efficiency) of the recycled cathode material according to example 1. In the case of the full-cell, the performance of the cell was evaluated by a cathode reference specific capacity obtained by dividing the capacity measured during charging and discharging of the cell, by the mass of the recycled cathode material in the cell.

(1) Half-cell charge/discharge test

(I) Half-cell rate test

A charging and discharging test was performed with a current density varied under following conditions.

Test temperature: 25°C
Potential range: 3.0 to 4.2 V vs. Li+/Li
Current density steps: 0.1C → 0.2C → 0.5C → 1C → 2C → 5C → 10C → 0.1C
Number of cycles: 5 cycles for each current density, 40 cycles in total.

Wherein, 1C = 150mA/g - recycled cathode material

The results are shown in FIG. 3. In FIG. 3, a lower horizontal axis indicates the number of cycles, an upper horizontal axis indicates a current density level, a left vertical axis indicates the specific capacity, and a right vertical axis indicates efficiency. Then, release is plotted with □, insertion is plotted with ◇, and efficiency is plotted with ○.

(II) Half-cell cycle test

A charging and discharging test was performed under the following conditions with a constant current density.

Test temperature: 25°C
Potential range: 3.0 to 4.2 V vs. Li$^+$/Li
Current density: 2C
Number of cycles: 500 cycles.

Wherein, 1C = 150mA/g - recycled cathode material

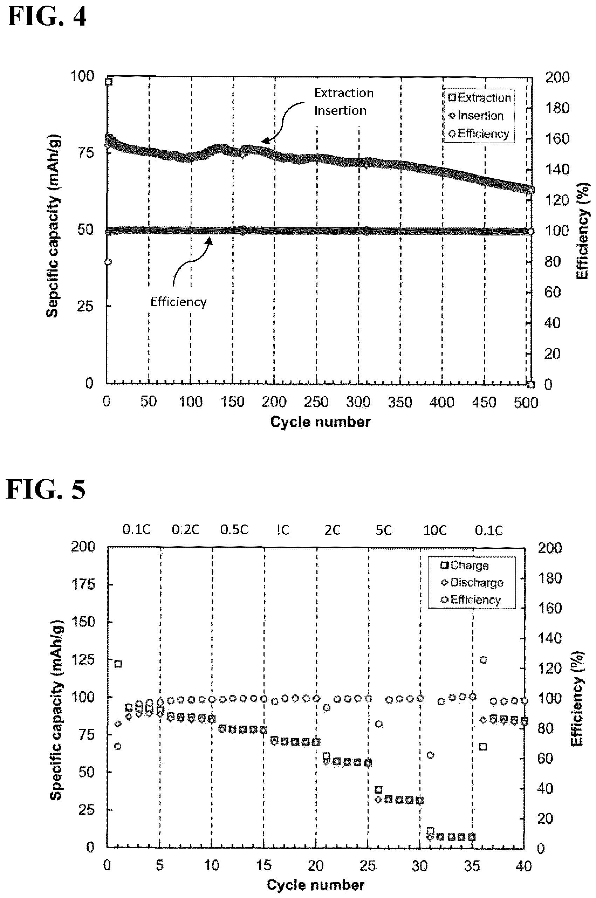

The results are shown in FIG 4. In FIG. 4, the lower horizontal axis indicates the number of cycles, the left vertical axis indicates the specific capacity, and the right vertical axis indicates the efficiency. When the release was plotted with □, the insertion was plotted with ◇, and the efficiency was plotted with O, the plots of the release: □ and insertion:◇ were overlapped.

(2) Full-cell charge/discharge test

(I) Full-cell rate test

A charging and discharging test was performed, with the current density varied under the following conditions.

Test temperature: 25°C
Cell voltage potential range: 2.5 to 4.2V
Current density steps: 0.1C → 0.2C → 0.5C → 1C → 2C → 5C → 10C → 0.1C
Number of cycles: 5 cycles for each current density, 40 cycles in total.
Wherein, 1C = 120mA/g - recycled cathode material

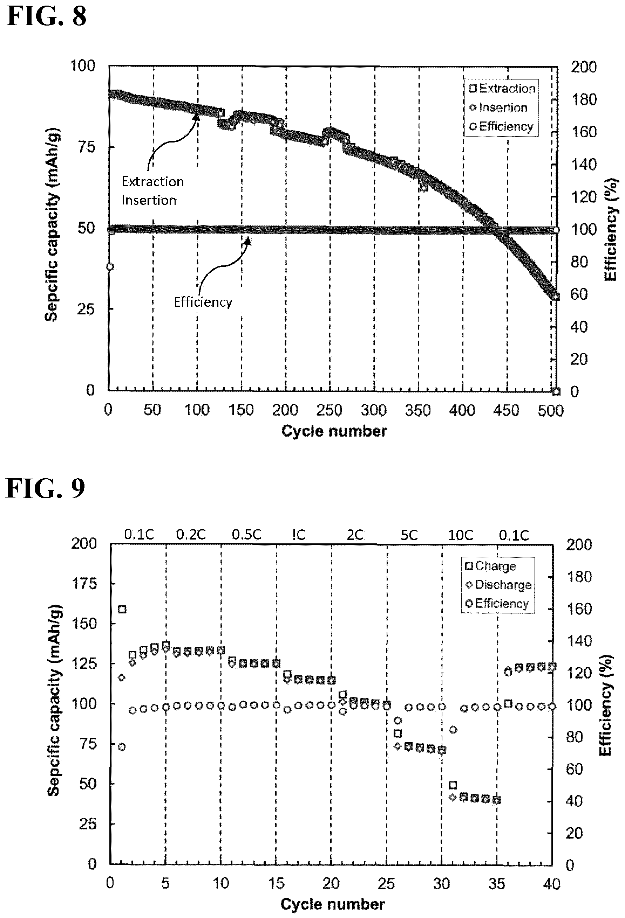

The results are shown in FIG. 5 and Table 6. The numerical values in Table 6 refer to the specific capacities in FIG. 5. The results of comparative example 1 (FIG. 9) described later are also shown in the table below. In FIG. 5, the lower horizontal axis indicates the number of cycles, the upper horizontal axis indicates the current density step, the left vertical axis indicates the specific capacity, and the right vertical axis indicates the efficiency. Then, charging was plotted with □, discharging was plotted with ◇, and efficiency was plotted with ○.

[Table 6]

| Rate | 0.1C | 0.2C | 0.5C | 1C | 2C | 5C | 10C | 0.1C |
|---|---|---|---|---|---|---|---|---|
| Example 1 (recycled cathode material) | 88.7 | 85.3 | 78.5 | 70.4 | 57.1 | 32.4 | 7.8 | 84.8 |
| Comparative example 1 (commercially available cathode material) | 130.1 | 1'32.2 | 125.2 | 115 | 100.7 | 72.5 | 41.4 | 192.9 |

(II) Full-cell cycle test

A charging and discharging test was performed under the following conditions with a constant current density.

Test temperature: 25°C
Cell voltage potential range: 2.5 - 4.2V
Current density: 2C
Number of cycles: 1000 cycles.
Wherein, 1C = 120mA/g - recycled cathode material

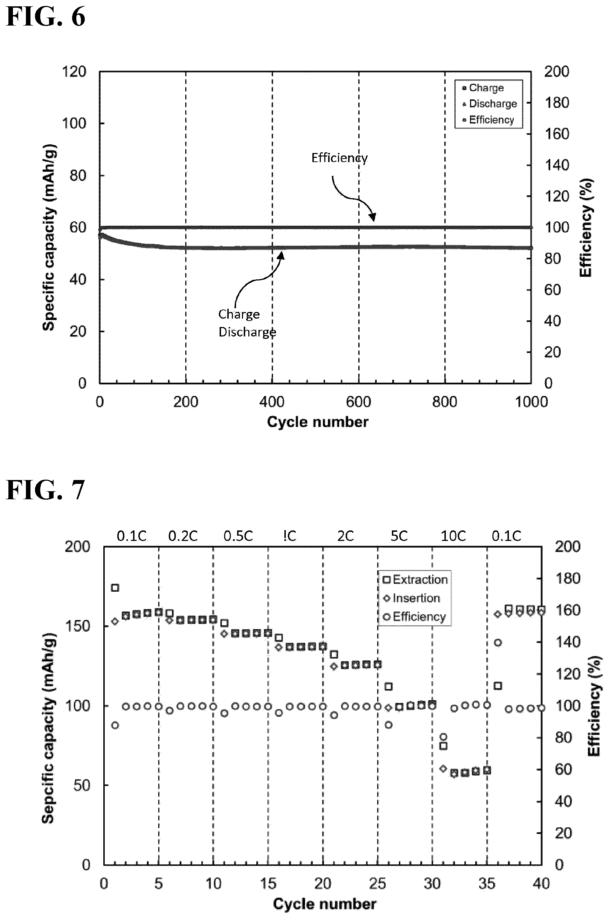

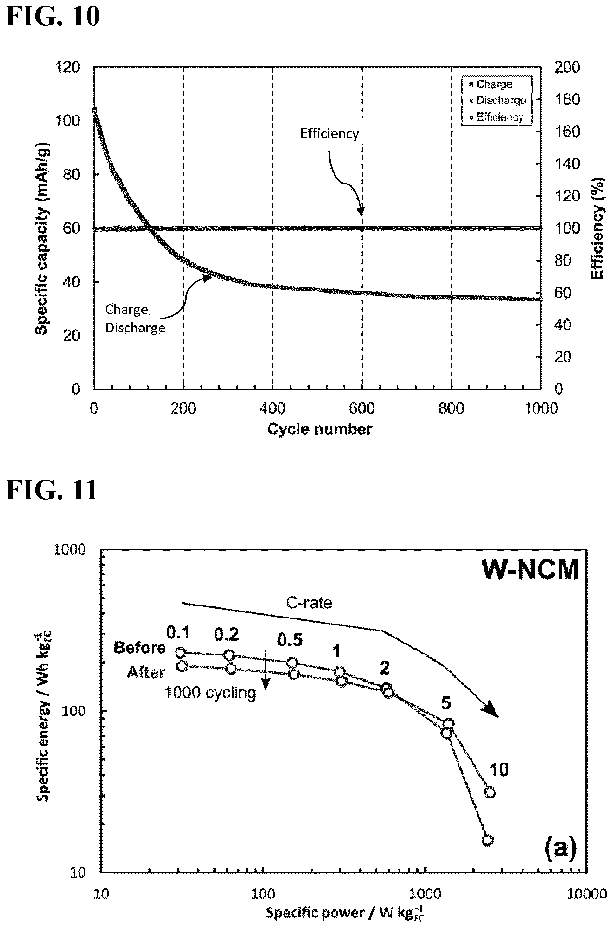

The results are shown in FIG. 6 and Table 7. The numerical values in Table 7 refer to the specific capacities in FIG. 6. The results of comparative example 1 (FIG. 10) described later are also shown in the table below. In FIG. 6, the lower horizontal axis indicates the number of cycles, the left vertical axis indicates the specific capacity, and the right vertical axis indicates the efficiency. When charging was plotted with □, discharging was plotted with ◇, and the efficiency was plotted with O, the plots of the charging:□ and discharging:◇ were overlapped.

[Table 7]

| Cycle number | 10 | 200 | 400 | 600 | 800 | 1000 |
|---|---|---|---|---|---|---|
| Example 1 (recycled cathode material) | 56.6 | 52 | 52 | 52.3 | 52.4 | 51.9 |
| Comparative example 1 (commercially available cathode material) | 98.5 | 48.2 | 38_1 | 35_8 | 34_4 | 33.5 |

Also, from the rate performance before and after the cycle test, a relationship between specific energy and specific power (so-called Ragone plot) was created to evaluate the properties of the full-cell. From a total mass of the cathode active material and the anode active material, the specific energy and specific power of the full-cell were calculated by the following formulas.

[Formula 1]

$$E_{\mathrm{FC}} = \frac{W_{\mathrm{D}}}{AM_{\mathrm{total}}}\ \left[\mathrm{Wh\ kg_{FC}^{-1}}\right] \qquad \cdot\ \cdot\ \cdot\ \ (1)$$

[Formula 2]

$$P_{\mathrm{FC}} = \frac{V_{\mathrm{Dave}} \times I_{\mathrm{D}}}{AM_{\mathrm{total}}}\ \left[\mathrm{W\ kg_{FC}^{-1}}\right] \qquad \cdot\ \cdot\ \cdot\ \ (2)$$

Here, $E_{\mathrm{FC}}$ is a specific energy, $W_{\mathrm{D}}$ is an energy released during discharge, $AM_{\mathrm{total}}$ is a total mass of the cathode active material and the anode active material, $P_{\mathrm{FC}}$ is a specific power, $V_{\mathrm{Dave}}$ is an average voltage during discharge, and $I_{\mathrm{D}}$ is a discharge current. Data from a third cycle at each C-rate during the rate test were selected for the construction of the Ragone plots. All electrochemical measurements were performed at 25°C. The results are shown in FIG. 11. The vertical axis indicates the specific energy, the horizontal axis indicates the specific power, Before indicates a state before the test, and After indicates a state after 1000 cycles of the test. Numerical values in the figure indicate the C rate.

(Comparative example 1) 1. Preparation of cobalt-nickel-manganese cathode material

A commercially available cobalt-nickel-manganese-based cathode material (manufactured by Beijing Early Spring Material Technology Co., Ltd.) was prepared.

2. Manufacture of battery

A half-cell and a full-cell according to comparative example 1 were manufactured in the same manner as in example 1 using CR2032 type coin cells, instead of the recycled cathode material of example 1 as the active material.
In the case of the half-cell, an estimated specific capacity of the commercially available cathode material was 150 mAh/g.
In the case of the full-cell, an estimated specific capacity of the commercially available cathode material was 155 mAh/g. The ratio of the anode capacity to the cathode capacity (NP ratio) in the case of assembly of the full-cell was 1.2, which was the same as in the case of the full-cell in which the recycled cathode material was used.

3. Battery charge/discharge test

(1) Half-cell charge/discharge test and (2) Full-cell charge/discharge test were performed to the half-cell and full-cell manufactured according to comparative example 1 under the same conditions as in example 1, except for using 155 mA/g - commercially available cathode material in the "(2) Full-cell charge/discharge test".

FIG. 7 shows the results of "(I) Half-cell rate test" in "(1) Half-cell charge/discharge test". The description of FIG. 7 is the same as that of FIG. 3.

FIG. 8 shows the results of "(II) Half-cell cycle test" in "(1) Half-cell charg/discharge test". The description of FIG. 8 is the same as that of FIG. 4.

FIG. 9 shows the results of "(I) full-cell rate test" in "(2) Full-cell charge/discharge test". The description of FIG. 9 is the same as that of FIG. 5.

FIG. 10 shows the results of "(II) Full-cell cycle test" in "(2) Full-cell charge/discharge test". The description of FIG. 10 is the same as that of FIG. 6.

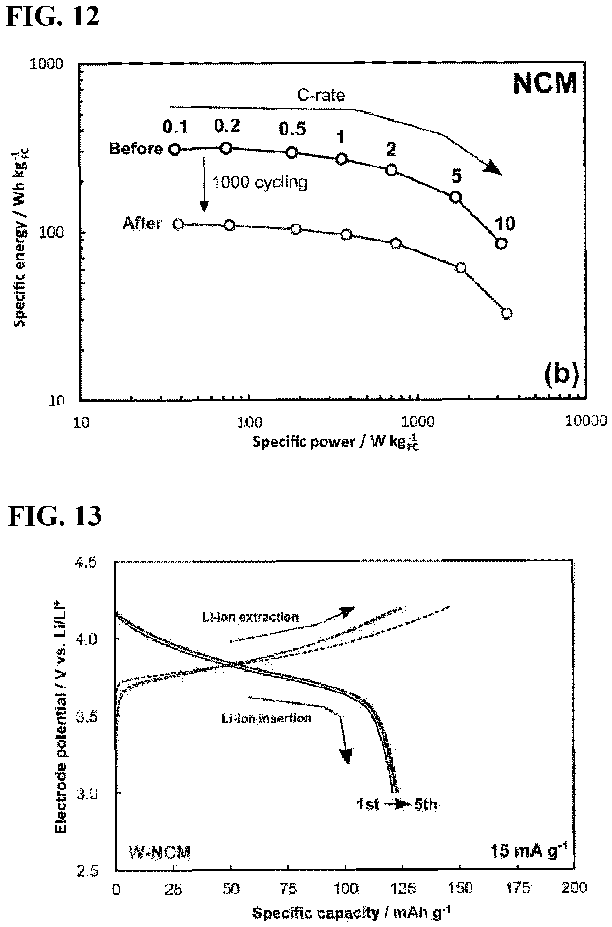

A "Ragone plot" is shown in FIG. 12. The description of FIG. 12 is the same as that of FIG. 11.

(Consideration of the test results according to example 1 and comparative example 1)

<Test results related to half-cell>

FIG. 13 is a voltage dependent capacity profile in each cycle at 15 mA/g according to example 1.

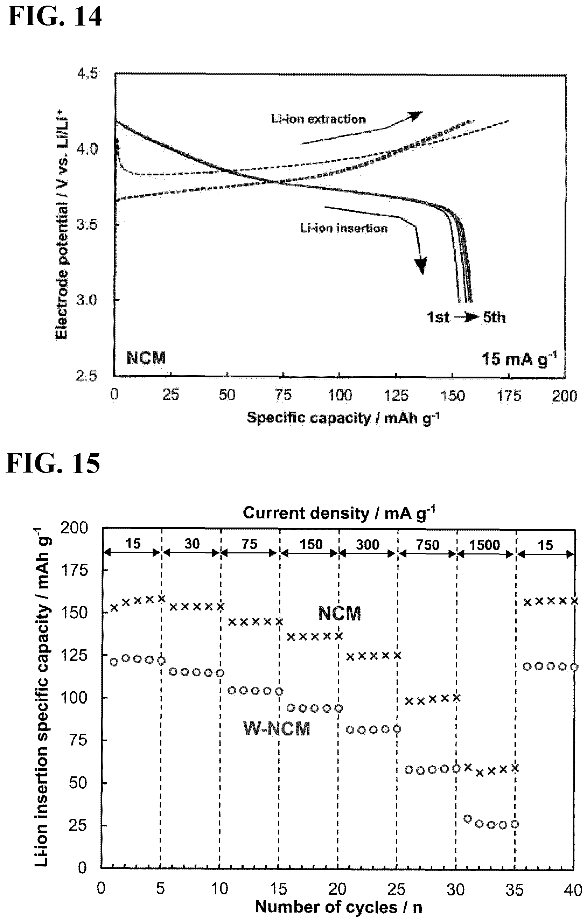

FIG. 14 is a voltage dependent capacity profile in each cycle at 15 mA/g according to comparative example 1.

FIG. 15 is a diagram in which the results (release: Extraction) of FIG. 3 according to example 1 and the results (release: Extraction) of FIG. 7 according to comparative example 1 are summarized in one graph. NCM is plotted with x and W-NCM is plotted with O.

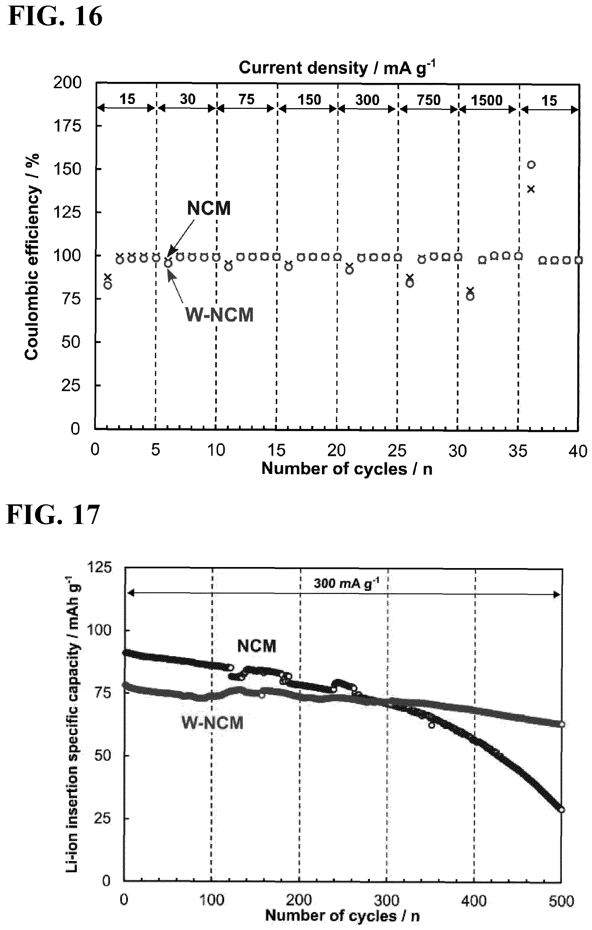

FIG. 16 is a diagram in which the results of FIG. 3 (insertion: Insertion) according to example 1 and the results of FIG. 7 (insertion: Insertion) according to comparative example 1 are summarized in one graph. NCM is plotted with $\times$ and W-NCM is plotted with O.

FIG. 17 is a diagram in which the results (release: Extraction) of FIG. 4 according to example 1 and the results (release: Extraction) of FIG. 8 according to comparative example 1 are summarized in one graph.

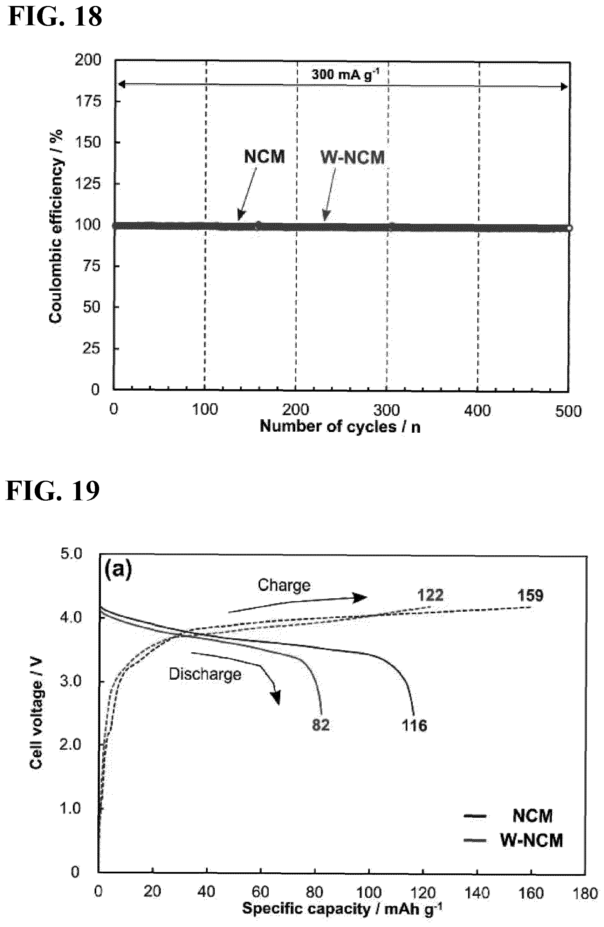

FIG. 18 is a diagram in which the results (efficiency) of FIG. 4 according to example 1 and the results (efficiency) of FIG. 8 according to comparative example 1 are summarized in one graph.

In the half-cell, a voltage dependent capacity profile for the initial 5 cycles at a minimum current density of 15 mA/g reveals that the specific capacities at the first lithium ion extraction and insertion steps were 146 mAh/g and 121 mAh/g, respectively, and its coulombic efficiency (CE) was 82.9% in example 1.

The specific capacities of NCM were 174 mAh/g and 153 mAh/g, respectively, and CE was 87.7% in comparative example 1.

Example 1 and comparative example 1 showed basically similar voltage dependent capacity profiles.

The CE of the cathode active material was nearly 100% for both, except for the first cycle at each current density, the first cycle being subject to the hysteresis of the previous cycle. The Li ion insertion specific capacities of example 1 and comparative example 1 converged to 120 mAh/g and 155 mAh/g, respectively in the last 5 cycles where the current density was lowered to 15 mA/g. This value was adopted as an estimated specific capacity.

In the cycle test performed at 300 mA/g, the Li ion insertion specific capacity of example 1 at the start of the test was lower than that of comparative example 1. However, in example 1, the specific capacity was sufficiently maintained even after 500 cycles, showing an excellent capacity retention rate (80.7%, from the results of the 5th and 500th cycles). However, a large capacity decrease (33.6%) was observed in comparative example 1.

<Test results regarding the full-cell>

FIG. 19 shows a potential dependent capacity profile for the first cycle at 12.0 mA/g according to example 1 and at 15.5 mA/g according to comparative example 1.

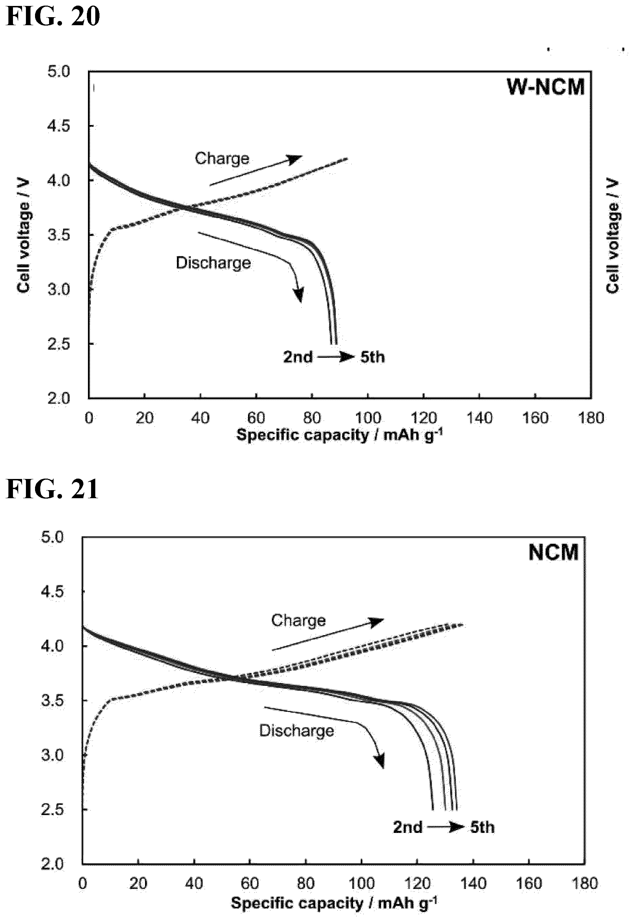

FIG. 20 is a voltage dependent capacity profile for the 2nd to 5th cycles at 12.0 mA/g at the 2nd to 5th cycles according to example 1.

FIG. 21 is a voltage dependent capacity profile for the 2nd to 5th cycles at 15.5 mA/g according to comparative example 1.

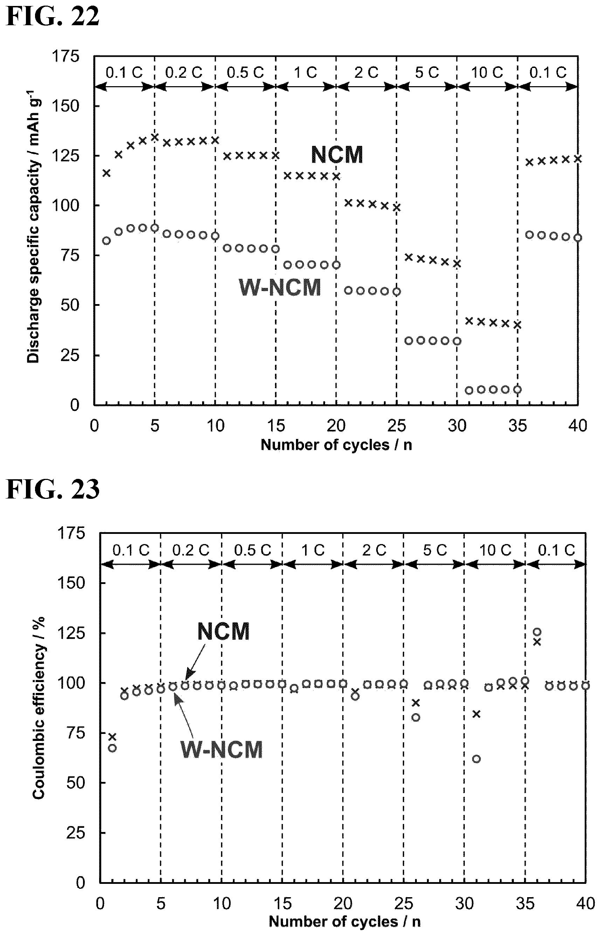

FIG. 22 is a graph in which the results (release: Extraction) of FIG. 5 according to example 1 and the results (release: Extraction) of FIG. 9 according to comparative example 1 are summarized in one graph. NCM is plotted with $\times$ and W-NCM is plotted with O.

FIG. 23 is a diagram in which the results of FIG. 5 (insertion: Insertion) according to example 1 and the results (insertion: Insertion) of FIG. 9 according to comparative example 1 are summarized in one graph. NCM is plotted with $\times$ and W-NCM is plotted with O.

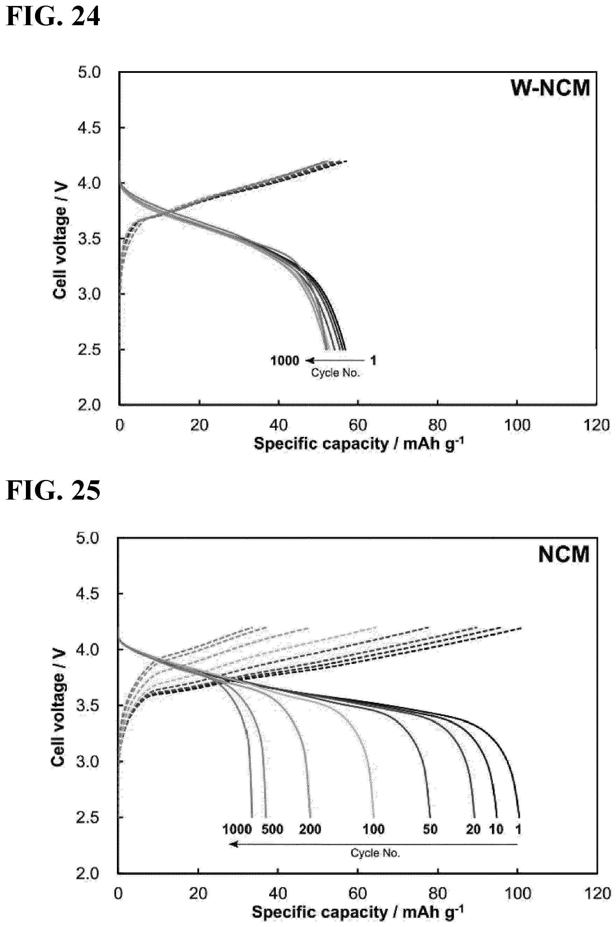

FIG. 24 is a potential dependent capacity profile for each cycle when a current density is kept at 2C for the full-cell in which graphite is used as an anode, according to example 1.

FIG. 25 is a potential dependent capacity profile for each cycle when the current density is kept at 2C for the full-cell in which graphite is used as an anode, according to comparative example 1.

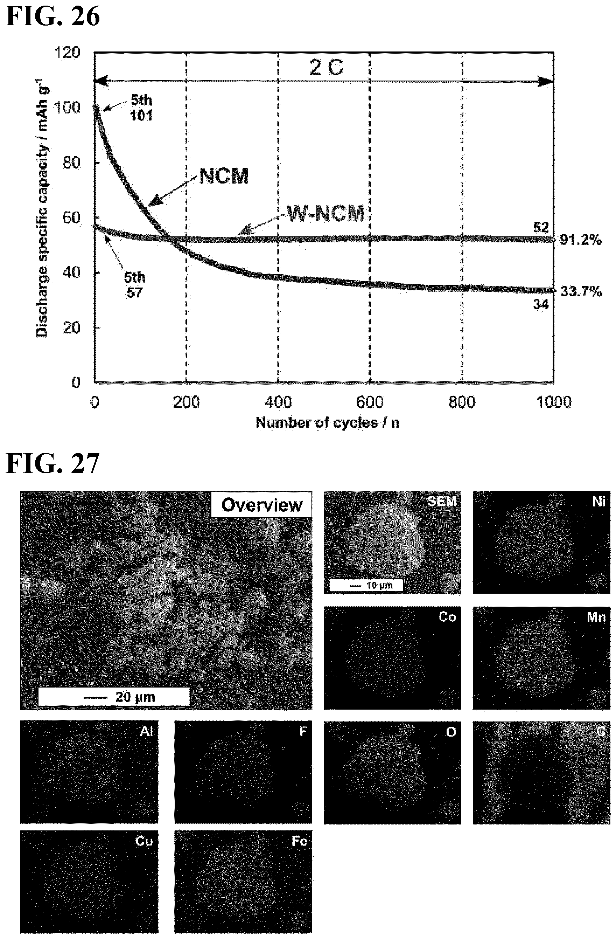

FIG. 26 is a graph in which the results of FIG. 5 (Charge, Discharge) according to example 1 and the results of FIG. 10 (Charge, Discharge) according to comparative example 1 are summarized in one graph.

As can be seen in FIG. 24, the capacity profile by cell voltage of example 1 (W-NCM) showed only a slight change during 1000 charge-discharge cycles. In contrast, as can be seen in FIG. 25, the capacity profile by cell voltage of comparative example 1 (NCM) showed steep rises and falls while maintaining a low specific capacity, along with an increase in the number of cycles.

A slight increase in internal resistance was observed in both cathode active materials at the initial stage of charging and discharging. The increase in internal resistance can be explained by the growth of the solid electrolyte interfacial film on the cathode and anode, decomposition of the electrolyte, and structural deterioration of the active material. Accordingly, deterioration as seen in comparative example 1 (NCM) due to charge-discharge cycles is attributed to deactivation of Li ions in the cathode and anode.

When discharge specific capacities of example 1 (W-NCM) and comparative example 1 (NCM) were measured, the specific capacity was almost maintained in example 1 (W-NCM), but it decreased considerably after about 400 cycles in comparative example 1 (NCM). The discharge specific capacity of example 1 (W-NCM) exceeded the discharge specific capacity of comparative example 1 (NCM) at 160th cycle, and the discharge specific capacity of example 1 (W-NCM) exceeded that of comparative example 1 (NCM) at the 100th cycle.

As shown in FIG. 26, the capacity retention rate at the end of the cycle test was 91.2% in example 1 (W-NCM) and 33.7% in comparative example 1 (NCM). This is a value calculated from the discharge specific capacity at the 5th cycle and the 1000th cycle. It was shown that example 1 (W-NCM) in the full-cell hardly deteriorated even after repeated charging and discharging at 2C.

As shown in FIGS. 5 and 9, in the "full-cell rate test", the specific capacity of the recycled cathode material (W-NCM) according to example 1 and the commercially available cathode material (NCM) according to comparative example 1 were compared. The result shows that the recycled cathode material exhibited a specific capacity of about 70% of the commercially available cathode material.

Here, when considering that the content of the metal element functioning as the cathode material in the recycled cathode material is 86% by mass, it was considered that about 16% by mass of the metal element functioning as the cathode material does not function due to the influence of impurities.

However, as shown in FIGS. 6 and 10, the result of the above "full-cell cycle test" reveals that at the beginning of the cycle test, the commercially available cathode material showed a high specific capacity, but at the end of the cycle test, the recycled cathode material showed a higher specific capacity. As described above, the reason is considered as follows: the recycled cathode material has a lower specific capacity than the commercially available cathode material due to the influence of impurities, which reduces a burden on the cell and slows down the progress of deterioration that occurs along with the progress of the cycle.

That is, in the recycled cathode material, the specific capacity in the full-cell rate test is about 70% of that of the commercially available cathode material, but an adverse effect of impurities is considered to be limited. On the other hand, the specific capacity of the recycled cathode material was found to be decreased at a high rate.

On the other hand, the recycled cathode material maintained coulombic efficiency at a high full-cell rate, and maintained high coulombic efficiency even in the cycle test. Therefore, it was found that lithium ion insertion and desorption occurred without loss.

Further, in the full-cell cycle test, at the beginning of the test, the commercially available cathode material exhibited a higher specific capacity, but at the end of the test, the recycled cathode material exhibited a higher specific capacity. Therefore, it was found that impurities have little effect on a battery life.

Further, the relationship between a weight energy and a power density of the full-cell was evaluated, using the results of the rate performance before and after the full-cell cycle test of example 1 (W-NCM) and comparative Example 1 (NCM) (see Figures 11 and 12).

The maximum specific energies of the full-cells of example 1 (W-NCM) and comparative example 1 (NCM) before the cycle test were 229 and 308 Wh/kg-FC, respectively. The W-NCM battery according to example 1 before the cycle test maintained a specific energy of 200 Wh/kg-FC at a specific power of less than 150 W/kg-FC, and meanwhile the NCM battery according to comparative example 1 maintained a specific energy of 200 Wh/kg-FC at a specific power of less than 1000 W/kg-FC.

After 1000 charge/discharge cycles at a current density of 2C, the W-NCM battery of example 1 showed a slight decrease in the specific energy of the W-NCM battery of example 1 at a specific power of below 500 W/kg-FC. The specific energy at a high specific power of (>1000 W/kg-FC) rather increases, reaching a specific energy of 32 W/kg-FC even at a high specific power of 2500 W kg/FC or more, thereby showing that the full-cell rate performance of the W-NCM battery of example 1 was substantially maintained even after charge-discharge cycles.

On the other hand, the maximum specific energy of the NCM battery of comparative example 1, which was charged and discharged 1000 times at a current density of 2C, decreased to 111 Wh/kg-FC, and it was found that the specific energy decreased throughout a specific power range.

These results suggested that LIB in which W-NCM was used as a cathode active material, maintained high energy density and output density even after charge-discharge cycles. This is a sufficient added value (premium) in terms of a battery performance. This added value (premium) is provided by the recycled LIB according to example 1, also by the recycled cathode material, and also by the recycled cathode material precursor.

(SEM image and elemental mapping image of particles composing the recycled cathode material according to example 1)

Particles composing the recycled cathode material according to example 1 were observed using a scanning electron microscope (SEM, VE-8800, manufactured by Keyence) (Photographs labeled "Overview" and "SEM" in the figure). Further, energy dispersive X-ray spectroscopy (EDX) is performed to the particles indicated by the SEM in the figure, using the EDX device (INCA Energy 250, manufactured by Oxford Instruments) attached to the SEM, to measure an elemental mapping and composition of particles containing carbon (C), oxygen (O) and fluorine (F), being non-metal elements.

FIG. 27 shows an SEM image and an elemental mapping image of particles composing the recycled cathode material according to example 1, and shows an elemental mapping image for each element (displayed in the upper right of the figure).

As seen in FIG. 27, the diameter of the particles was 10 to 50 $\mu$m, which was larger than a micron-sized LTMO cathode active material generally used.

As shown in FIG. 27, elemental mapping of specific particles suggested that all metal elements were uniformly distributed on a particle surface. The particles are fixed to a conductive carbon tape. A white signal detected outside the particles in the mapping image of C is caused by the carbon tape.

The EDX composition on the particle surface is shown in the table below.

[Table 8]

| Element | Mn (mass%) | Co (mass%) | Ni (mass%) | Cu (mass%) | Fe (mass%) | Al (mass%) | C (mass%) | F (mass%) | O (mass%) |
|---|---|---|---|---|---|---|---|---|---|
| Analysis value | 18.5 | 16.5 | 18.2 | 2.1 | 1.7 | 1.7 | 4.7 | 3.4 | 33.2 |

As seen in the elemental mapping image, EDX result reveals that a large amount of carbon C (4.7% by mass) and fluorine F (3.4% by mass) were detected on the particle surface of example 1 (W-NCM).

This indicates remaining of excess $Li_2CO_3$, a fluoride substance derived from the polyvinyl fluoride binder and $LiPF_6$ salt derived from the electrolytic solution, used in the cathode of a new LIB battery. Since the particles were fired in the air at 800°C for 4 hours, there is a possibility that thermally stable metal fluoride and LiF were generated in the particles.

Further, it was found that a bulk of example 1 (W-NCM) was stoichiometrically excessively loaded with 4% by mass of Li.

In the process of thermally decomposing the waste LIB, the waste LIB was heated at 800°C with the air supply shut off, while initially being placed under the atmosphere. The decomposition of a PVDF binder used to bond the $LiNi_{1/3}Co_{1/3}Mn_{1/3}O_2$ particles using an Al foil current collector, becomes active above 350°C, to reduce $LiNi_{1/3}Co_{1/3}Mn_{1/3}O_2$ and generate HF which can form LiF. In the process of thermally decomposing the cell, the $LiPF_6$ remaining in the electrolyte directly generates HF. Within a closed cell body, various metal fluorides and metal oxide fluorides are generated by the reaction of the generated HF and a direct reaction of PVDF or $LiPF_6$ with the cathode or anode. Residual F of those phases cannot be filtered in the hydrometallurgical process and remain in the W-NCM.

In the manufacture of W-NCM according to example 1, since it is finally sintered at 800°C in the air, the residual F may exist in the phases of metal fluorides, metal oxide fluorides, and LiF. These products are essentially resistant to Li-ion transport and contribute little to the cycle of Li-ion uptake and release at the cathode. However, it is speculated that a protective action of the metal fluoride such as $AlF_3$ formed on the surface of the ternary LTMO improves a cycle performance.

In consideration of the above points, in the composition of the surface of the particles obtained by EDX described herein, fluorine F is preferably in a range of 0.5 to 5.0% by mass, and carbon C may be in a range of 3.0 to 5.0% by mass.

(Examples 2 to 5)

Examples 2 to 5 were performed based on the following procedure.

[1. Manufacture of recycled cathode material precursor and recycled cathode material] was the same as in example 1 up to <acid treatment step>.

In the subsequent <Alkaline treatment step>, NaOH aqueous solution with a concentration of about 7.5 % by mass was added to the recovered filtrate to adjust a pH value as 11 to 13 to precipitate hydroxide. Then, the hydroxide was recovered using a centrifuge. During the centrifugation, an operation of replacing a supernatant liquid after centrifugation with ion-exchanged water, mixing, and centrifuging, was repeated about five times.

The recovered hydroxide was dried in a vacuum constant temperature bath at 85°C to obtain a recycled cathode material precursor according to each of examples 2 to 5. In examples 2 to 5, the above <Alkaline treatment step> was performed to 5 g of another physically treated product obtained by the same method while performing the above <Alkaline treatment step> to 5 g of the physically treated product, and this treatment was repeated until a total amount of the recycled cathode material precursor reached 60 g.

In this example, nickel, cobalt, and manganese are contained in each of the physically treated and recycled cathode material precursor. Further, iron, copper, and aluminum are contained in each of the physically treated product and recycled cathode material precursor.

Lithium carbonate corresponding to 0.9 to 1.1 equivalents with respect to the sum of hydroxides of cobalt, nickel and manganese, which were contained, was added to the recycled cathode material precursor according to examples 2 to 5, and the mixture was crushed and mixed using a mixer mill to obtain a crushed mixture. The crushed mixture was placed in an alumina crucible and fired in the atmosphere at 600°C for 1 hour and then at 900°C for 4 hours to obtain a fired product. The fired product was crushed using a mortar to obtain a recycled cathode material according to examples 2 to 5. A composition table of the recycled cathode material is shown below. A composition table of the commercially available new cathode material of comparative example 2 described later is also shown.

[Table 9]

| Element | Mn (mass%) | Co (mass%) | Ni (mass%) | Li (mass%) | Cu (mass%) | Fe (mass%) | Al (mass%) | Na (mass%) | Ca (mass%) | Mg (mass%) | Other (O or C or F) (mass%) |
|---|---|---|---|---|---|---|---|---|---|---|---|
| Com.Ex. 2 | 18.57 | 19.87 | 20.17 | 7.19 | 0.00 | 0.00 | 0.00 | 0.00729 | 0.00934 | 0.00834 | 34.17 |
| Example 2 | 17.57 | 16.07 | 18.20 | 6.65 | 2.31 | 1.24 | 1.92 | 0.01214 | 0.05583 | 0.02728 | 35.95 |
| Example 3 | 17.30 | 16.12 | 20.40 | 7.33 | 2.18 | 1.24 | 1.71 | 0.03837 | 0.04660 | 0.03224 | 33.59 |
| Example 4 | 15.68 | 16.01 | 17.23 | 7.94 | 2.18 | 1.22 | 1.61 | 0.07405 | 0.03865 | 0.02845 | 37.99 |
| Example 5 | 15.92 | 15.14 | 16.20 | 8.49 | 2.09 | 1.15 | 1.51 | 0.23451 | 0.03775 | 0.02662 | 39.20 |
| * Com.Ex. = Comparative Example | | | | | | | | | | | |

In the recycled cathode material according to examples 2 to 5, all [10. Definition reflecting the simplicity of each manufacturing method in the present embodiment] are satisfied. Further, each numerical range for the metal elements $\alpha$ and $\beta$ described in the present embodiment is satisfied. Other numerical ranges (preferred examples) (eg, contents of Mn, Co, Ni, Cu, Fe, Al, Na, Ca, Mg, Li) described in the present embodiment are also satisfied. Further, in the recycled cathode material precursor before obtaining the recycled cathode material according to examples 2 to 5 (that is, before adding Li), [10. Definition reflecting the simplicity of each manufacturing method in the present embodiment], each numerical range for the metal elements $\alpha$ and $\beta$, and numerical ranges (preferred examples) other than the content of Li are satisfied. In the above Table 9, each content can be calculated by conversion, with the value without Li content as 100% by mass. Each content after this conversion satisfies each of the above numerical ranges (preferred examples).

CR2032 type coin cells were used to manufacture half-cells and full-cells according to each of examples 2 to 5 in the same manner as in example 1 except for using the recycled cathode material according to each of examples 2 to 5 instead of the recycled cathode material according to example 1, as the active material. (1) a half-cell charge/discharge test and (2) a full-cell charge/discharge test were performed to each of the half-cells and full-cells manufactured according to examples 2 to 5, under the same conditions as in example 1.

Contents not described in (examples 2 to 5) are the same as in example 1.

(Comparative example 2)

A commercially available new LIB (manufactured by Shenzhen Tianxi Technology Development Co., Ltd.) employing a cobalt-nickel-manganese cathode material was prepared.

A half-cell and a full-cell according to comparative example 2 were manufactured using CR2032 type coin cells in the same manner as in example 1 except for using a commercially available new cobalt-nickel-manganese cathode material instead of the recycled cathode material according to example 1, as the active material. (1) a half-cell charge/discharge test and (2) a full-cell charge/discharge test were performed to each of the half-cell and the full-cell manufactured according to comparative example 2, under the same conditions as in example 1.

(Consideration of test results according to examples 2 to 5 and comparative example 2)

The test results are shown in Tables 10 and 11 below. Table 10 shows the results of the half-cell rate test and the half-cell cycle test. Table 11 shows the results of the full-cell rate test and the full-cell cycle test.

[Table 10]

| | Rate test (3.0-4.2 V vs. Li/Li+) | | | | | | Cycle test (3.0 4.2 V vs. Li/Li+) | | | | |
|---|---|---|---|---|---|---|---|---|---|---|---|
| | 0.1 C, 1st cycle, Li-ion extraction (mAh/g) | 0.1 C, 1st cycle, Li-ion insertion (mAh/g) | 0.1 C, 1st cycle, Coulombic efficiency (%) | 0.1 C, 3rd cycle, Li-ion insertion (mAh/g) | 10 C, 3rd cycle, Li-ion insertion (mAh/g) | 2nd-stage 0.1 C, 3rd cycle, Li-ion insertion (mAh/g) | 2 C, 1st cycle, Li-ion insertion (mAh/g) | 2 C, 200th cycle, Li-ion insertion (mAh/g) | 2 C, 200th cycle, Retention (%) | 2 C, 500th cycle, Li-ion insertion (mAh/g) | 2 C, 500th cycle, Retention (%) |
| Com.Ex. 2 | 162.7 | 141.3 | 86.9 | 140.7 | 57.7 | 143.3 | 109.3 | 18.2 | 16.6 | 6.3 | 5.8 |
| Example 2 | 138.2 | 101.0 | 73.1 | 86.8 | 0.2 | 81.3 | 46.7 | 21.7 | 46.4 | 17.3 | 36.9 |
| Example 3 | 150.6 | 117.6 | 78.1 | 113.2 | 0.6 | 107.0 | 67.9 | 50.7 | 74.7 | 25.4 | 37.5 |
| Example 4 | 137.0 | 101.9 | 74.4 | 103.2 | 5.8 | 105.5 | 78.1 | 36.8 | 47.0 | 12.7 | 16.3 |
| Example 5 | 127.8 | 93.1 | 72.8 | 91.5 | 0.3 | 89.4 | 49.6 | 42.2 | 85.0 | 21.3 | 42.8 |
| * Com.Ex. = Comparative Example | | | | | | | | | | | |

[Table 11]

| | Rate test (2.5 -4.2 V) | | | | | | Cycle test (2.5 -4.2 V) | | | | |
|---|---|---|---|---|---|---|---|---|---|---|---|
| | 0.1 C, 1st cycle, Li-ion extraction (mAh/g) | 0.1 C, 1st cycle, Li-ion insertion (mAh/g) | 0.1 C, 1st cycle, Coulombic efficiency (%) | 0.1 C, 3rd cycle, Li-ion insertion (mAh/g) | 10 C, 3rd cycle, Li-ion insertion (mAh/g) | 2nd-stage 0.1 C, 3rd cycle, Li-ion insertion (mAh/g) | 2 C, 1st cycle, Li-ion insertion (mAh/g) | 2 C, 200th cycle, Li-ion insertion (mAh/g) | 2 C, 200th cycle, Retention (%) | 2 C, 500th cycle, Li-ion insertion (mAh/g) | 2 C, 500th cycle, Retention (%) |
| Com.Ex. 2 | 175.4 | 150.4 | 85.8 | 149.2 | 68.9 | 137.5 | 118.0 | 56.3 | 47.7 | 10.1 | 8.5 |
| Example 2 | 150.6 | 109.6 | 72.8 | 107.2 | 16.0 | 98.3 | 74.4 | 52.1 | 70.0 | 39.2 | 52.7 |
| Example 3 | 151.7 | 121.3 | 80.0 | 122.2 | 35.5 | 115.6 | 80.1 | 50.2 | 62.6 | 32.2 | 40.1 |
| Example 4 | 150.2 | 103.0 | 68.6 | 107.9 | 33.2 | 108.6 | 81.1 | 50.2 | 61.8 | 20.2 | 24.9 |
| Example 5 | 142.7 | 100.1 | 70.2 | 101.5 | 16.6 | 95.8 | 54.1 | 28.7 | 53.0 | 19.5 | 36.0 |
| * Com.Ex. = Comparative Example | | | | | | | | | | | |

As shown in Tables 10 and 11, the cycle test reveals that examples 2 to 5 exhibited a higher retention rate than comparative example 2, in either case of 200 times or 500 times.

These results suggest that LIB in which W-NCM is used as a cathode active material, maintains high energy density and output density even after charge-discharge cycles. This is a sufficient added value (premium) in terms of a battery performance. The added value (premium) is provided by the recycled LIB, also by the recycled cathode material, and also by the recycled cathode material precursor according to examples 2 to 5.

**Claims**

1. A recycled cathode material precursor, comprising:

   a metal element $\alpha$ consisting of at least one of nickel, cobalt and manganese; and
   a metal element $\beta$ consisting of at least one of iron, copper and aluminum,
   wherein a content of the metal element $\beta$ is 0.5 to 20% by mass in the recycled cathode material precursor.

2. The recycled cathode material precursor according to claim 1, wherein a content of the metal element $\alpha$ is 30% by mass or more in the recycled cathode material precursor.

3. The recycled cathode material precursor according to claim 1, wherein a value of the content of the metal element $\alpha$/the content of the metal element $\beta$ is 6.0 or more in the recycled cathode material precursor.

4. The recycled cathode material precursor according to claim 1, wherein the metal element $\alpha$ is contained in the recycled cathode material precursor, with a hydroxide of the metal element $\alpha$ as a main component.

5. The recycled cathode material precursor according to claim 1, wherein the metal element $\beta$ is contained in the recycled cathode material precursor, with a hydroxide of the metal element $\beta$ as a main component.

6. The recycled cathode material precursor according to claim 1, wherein a content of Ca is 0.03 to 0.08% by mass and a content of Mg is 0.02 to 0.04% by mass, in the recycled cathode material precursor.

7. A recycled cathode material, comprising:

   lithium;
   a metal element $\alpha$ consisting of at least one of nickel, cobalt and manganese; and
   a compound $\beta$' consisting of at least one of iron oxide, copper oxide and aluminum oxide,
   wherein a content of the compound $\beta$' is 0.5 to 20% by mass in the recycled cathode material.

8. The recycled cathode material according to claim 7, wherein a content of the metal element $\alpha$ is 40 to 70% by mass in the recycled cathode material.

9. The recycled cathode material according to claim 7, wherein when a metal element $\beta$ is a metal element composing the compound $\beta$' and consisting of at least one of iron, copper, and aluminum,
   a value of a content of the metal element $\alpha$/a content of the metal element $\beta$ is 6.0 or more in the recycled positive electrode material.

10. The recycled cathode material according to claim 7, wherein a content of Ca is 0.03 to 0.08% by mass and a content of Mg is 0.02 to 0.04% by mass in the recycled cathode material.

11. A recycled lithium ion secondary battery configured by the recycled cathode material according to any one of claims 7 to 10, which is a recycled lithium ion secondary battery comprising a cathode, an anode, a separator, and an electrolyte.

12. A method for manufacturing a recycled cathode material precursor including a metal element $\alpha$ consisting of at least one of nickel, cobalt and manganese, and a metal element $\beta$ consisting of at least one of iron, copper and aluminum, the method comprising:

   applying heat treatment to a lithium ion secondary battery, which is an object to be treated, to obtain a heat-treated product;

crushing the heat-treated product to obtain a crushed product; and

physically separating the crushed product to obtain a physically treated product, and concentrating the metal element $\alpha$ in the physically treated product,

wherein a content of the metal element $\beta$ is 0.5 to 20% by mass in the recycled cathode material precursor.

13. A method for manufacturing a recycled cathode material precursor according to claim 12, further comprising:

applying the heat treatment at 700°C or higher;

adding an acid solution to the physically treated product to obtain an acid-treated solution in which the metal element $\alpha$ and the metal element $\beta$ are dissolved; and

mixing the acid-treated solution and an alkaline solution to precipitate the dissolved metal element $\alpha$ and metal element $\beta$ to obtain a recycled cathode material precursor.

14. The method for manufacturing a recycled cathode material precursor according to claim 12, wherein in the physical separation, a content of the metal element $\beta$ in the crushed product is 20% by mass or less.

15. The recycled cathode material precursor according to claim 12, wherein a content of the metal element $\alpha$ is 40% to 70% by mass in the physically treated product.

16. The recycled cathode material precursor according to claim 12, wherein a value of the content of the metal element $\alpha$/the content of the metal element $\beta$ is 6.0 or more in the physically treated product.

17. The method for manufacturing a recycled cathode material precursor according to claim 12, wherein the physical separation includes at least a magnetic separation.

18. The method for manufacturing a recycled cathode material precursor according to claim 12, wherein the physical separation includes at least a classifying separation and a magnetic separation.

19. The method for manufacturing a recycled cathode material precursor according to claim 12, wherein a difference between mass 1 of each element composing the metal element $\alpha$ in the physically treated product and mass 2 of each element composing the metal element $\alpha$ in the recycled cathode material precursor is 30% or less of mass 1 for each element.

20. The method for manufacturing a recycled cathode material precursor according to claim 12, wherein when comparing content ratio 1 between elements composing the metal element $\alpha$ in the physically treated product and content ratio 2 between elements composing the metal element $\alpha$ in the recycled cathode material precursor, a change range is 30% or less.

21. The method for manufacturing a recycled cathode material precursor according to claim 12, wherein a difference between mass 3 of the metal element $\beta$ in the physically treated product and mass 4 of the metal element $\beta$ in the recycled cathode material precursor, is 30% or less of mass 3 for each metal element $\beta$.

22. The method for manufacturing a recycled cathode material precursor according to claim 12, wherein when comparing content ratio 3 between elements composing the metal element $\beta$ in the physically treated product and content ratio 4 between elements composing the metal element $\beta$ in the recycled cathode material precursor, a change range is 30% or less.

23. The method for manufacturing a recycled cathode material precursor according to claim 12, wherein when comparing content ratio 5 between elements composing the metal element $\alpha$ and the metal element $\beta$ in the physically treated product and content ratio 6 between elements composing the metal element $\alpha$ and the metal element $\beta$ in the recycled cathode material precursor, a change range is 30% or less.

24. The method for manufacturing a recycled cathode material precursor according to claim 12, wherein, a content of Ca is 0.03 to 0.08% by mass, and a content of Mg is 0.02 to 0.04% by mass in the physically treated product.

25. A method for manufacturing a recycled cathode material, the method comprising:

mixing the recycled cathode material precursor obtained by the method for manufacturing a recycled cathode material precursor according to any one of claims 12 to 24 and a predetermined amount of a lithium source to obtain a mixed powder; and

firing the mixed powder to obtain a recycled cathode material.

# FIG. 1

**Lithium secondary battery to be treated**

↓

| Heat treatment step |

↓

**Heat-treated product**

↓

| Crushing step |

↓

| Classifying step |

↓

**Fine-grained product (Black powder)**

↓

| Magnetic separation step |

↓

**Physically treated product**

↓

**Addition of acid** → | Acid treatment step |

↓

**Filtrate**

↓

**Addition of alkali** → | Alkaline treatment step |

↓

**Precipitate**

↓

**Addition of water** → | Washing step |

↓

**Recycled cathode material precursor**

↓

**Addition of Lithium compound** → | Crushing and mixing step |

↓

| Firing step |

↓

| Crushing step |

↓

**Recycled cathode material**

↓

| Battery manufacturing step |

↓

**Lithium ion secondary battery**

# FIG. 2

CR2032

Washer

Spacer

Anode or Li foil

Gasket

Separator

Cathode

# FIG. 3

# FIG. 4

# FIG. 5

## FIG. 6

## FIG. 7

## FIG. 8

## FIG. 9

## FIG. 10

## FIG. 11

## FIG. 12

(b)

## FIG. 13

## FIG. 14

## FIG. 15

## FIG. 16

## FIG. 17

## FIG. 18

## FIG. 19

**FIG. 20**

**FIG. 21**

## FIG. 22

## FIG. 23

**FIG. 24**

**FIG. 25**

## FIG. 26

## FIG. 27

## INTERNATIONAL SEARCH REPORT

International application No.

**PCT/JP2022/024041**

**A. CLASSIFICATION OF SUBJECT MATTER**

**H01M 10/54**(2006.01)i; **H01M 4/505**(2010.01)i; **H01M 4/525**(2010.01)i
FI: H01M10/54; H01M4/505; H01M4/525

According to International Patent Classification (IPC) or to both national classification and IPC

**B. FIELDS SEARCHED**

Minimum documentation searched (classification system followed by classification symbols)

H01M10/54; H01M4/505; H01M4/525

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2014-207192 A (TODA KOGYO CORP.) 30 October 2014 (2014-10-30) <br> entire text, all drawings | 1-25 |
| A | JP 2016-108161 A (CS ENERGY MATERIALS LTD.) 20 June 2016 (2016-06-20) <br> entire text, all drawings | 1-25 |
| A | JP 2020-532849 A (LG CHEM, LTD.) 12 November 2020 (2020-11-12) <br> entire text, all drawings | 1-25 |
| A | JP 2021-72267 A (NIPPON SHOKUBAI CO., LTD.) 06 May 2021 (2021-05-06) <br> entire text, all drawings | 1-25 |

☐ Further documents are listed in the continuation of Box C.　　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 August 2022** | **30 August 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2022/024041**

| Patent document cited in search report | | | Publication date (day/month/year) | Patent family member(s) | | Publication date (day/month/year) |
|---|---|---|---|---|---|---|
| JP | 2014-207192 | A | 30 October 2014 | (Family: none) | | |
| JP | 2016-108161 | A | 20 June 2016 | US 2017/0320752 entire text, all drawings | A1 | |
| | | | | WO 2016/088775 | A1 | |
| | | | | EP 3228595 | A1 | |
| | | | | CN 107074586 | A | |
| | | | | KR 10-2017-0091141 | A | |
| JP | 2020-532849 | A | 12 November 2020 | US 2020/0220173 entire text, all drawings | A1 | |
| | | | | WO 2019/059552 | A2 | |
| | | | | EP 3671917 | A2 | |
| | | | | KR 10-2019-0032118 | A | |
| | | | | CN 111095630 | A | |
| JP | 2021-72267 | A | 06 May 2021 | (Family: none) | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5847742 B